# EUROPÄISCHE PATENTSCHRIFT

(11) **EP 2 430 073 B1**
(45) Veröffentlichungstag und Bekanntmachung des Hinweises auf die Patenterteilung: **07.01.2015**
(21) Anmeldenummer: 10718166.1
(22) Anmeldetag: 06.05.2010
(51) Int. Cl.: C08G 73/02

(54) **KATIONISCHE BENZOXAZIN(CO)POLYMERE**
CATIONIC BENZOXAZINE (CO)POLYMERS
(CO)POLYMÈRES DE BENZOXACINE CATIONIQUES

(30) Priorität: 12.05.2009 DE 102009003032
(43) Veröffentlichungstag der Anmeldung: 21.03.2012
(73) Patentinhaber: Henkel AG & Co. KGaA, 40589 Düsseldorf (DE)
(72) Erfinder: TADEN, Andreas, 40597 Düsseldorf (DE); KREILING, Stefan, 69214 Eppelheim (DE); SCHÖNFELD, Rainer, 40627 Düsseldorf (DE); BARRELEIRO, Paula, 40593 Düsseldorf (DE); EITING, Thomas, 40589 Düsseldorf (DE)
(86) Internationale Anmeldenummer: PCT/EP2010/056178
(87) Internationale Veröffentlichungsnummer: WO 2010/130626

(56) Entgegenhaltungen:
- EP-A1- 1 760 110
- WO-A1-00/00535
- KISKAN B ET AL: "Synthesis, characterization, and properties of new thermally curable polyetheresters containing benzoxazine moieties in the main chain", JOURNAL OF POLYMER SCIENCE. PART A, POLYMER CHEMISTRY, JOHN WILEY & SONS, INC, US, Bd. 46, Nr. 2, 15. Januar 2008 (2008-01-15), Seiten 414-420, XP002554139, ISSN: 0887-624X, DOI: DOI:10.1002/POLA.22392 [gefunden am 2007-12-04]
- GAREA S A ET AL: "A new strategy for polybenzoxazine-montmorillonite nanocomposites synthesis", POLYMER TESTING, ELSEVIER, Bd. 28, Nr. 3, 1. Mai 2009 (2009-05-01), Seiten 338-347, XP002603266, ISSN: 0142-9418, DOI: DOI:10.1016/J.POLYMERTESTING.2009.01.009
- NAGAI A ET AL: "Synthesis and crosslinking behavior of a novel linear polymer bearing 1,2,3-triazol and benzoxazine groups in the main chain by a step-growth click-coupling reaction", JOURNAL OF POLYMER SCIENCE. PART A, POLYMER CHEMISTRY, JOHN WILEY & SONS, INC, US, Bd. 46, Nr. 7, 1. April 2008 (2008-04-01), Seiten 2316-2325, XP002554140, ISSN: 0887-624X, DOI: DOI:10.1002/POLA.22558 [gefunden am 2008-02-22]
- YILDIRIM A ET AL: "Synthesis, characterization and properties of naphthoxazine-functional poly(propyleneoxide)s", EUROPEAN POLYMER JOURNAL, PERGAMON PRESS LTD. OXFORD, GB, Bd. 42, Nr. 11, 1. Januar 2006 (2006-01-01), Seiten 3006-3014, XP002603265, ISSN: 0014-3057, DOI: DOI:10.1016/J.EURPOLYMJ.2006.07.019

## Beschreibung

Die vorliegende Erfindung betrifft kationische Benzoxazin(co)polymere, in denen mindestens 5% aller Stickstoffatome in Form permanent quartärer Stickstoffatome vorliegen, sowie ein Verfahren zur Herstellung der genannten Polymere. Die Erfindung betrifft weiterhin ein Wasch- und Reinigungsmittel oder Textilbehandlungsmittel bzw. ein kosmetisches Mittel, das mindestens ein kationisches Benzoxazin(co)polymer der vorliegenden Erfindung enthält.

Benzoxazin(co)polymere sind aus dem Stand der Technik bekannt und werden beispielsweise in der internationalen Patentanmeldung WO 00/00535 A1 beschrieben. Sie verfügen in der Regel über eine hohe Glasübergangstemperatur und zeichnen sich durch ihre guten elektrischen Eigenschaften und ihr positives Brandschutzverhalten aus. Aufgrund der mangelnden Löslichkeit in wässrigen Medien können die bekannten Benzoxazin(co)polymere in der Regel nicht in Form wässriger Lösungen, Emulsionen oder Dispersionen appliziert werden.

Für viele Anwendungsbereiche ist es aber von entscheidender Bedeutung, dass Benzoxazin(co)polymere in Form wässriger Dareichungsformen applizierbar sind, da beispielsweise für kosmetische Anwendungen die Verwendung schädlicher organischer Lösungsmittel nicht akzeptabel ist.

Auch aus ökologischen Gesichtspunkten ist es von entscheidendem Vorteil Benzoxazin(co)polymere zu entwickeln, die eine hohe Wasserlöslichkeit aufweisen, da auf diese Weise der Einsatz flüchtiger organischen Substanzen (VOC) bei der Anwendung der genannten Polymere minimiert werden kann.

Ziel der vorliegenden Erfindung war daher die Bereitstellung von Benzoxazin(co)polymeren, die eine hohe Löslichkeit und/oder gute Dispergierbarkeit in wässrigen Lösungen aufweisen und die daher ohne die Verwendung von schädlichen organischen Lösungsmitteln applizierbar sind.

Überraschenderweise wurde nun gefunden, dass kationische Benzoxazin(co)polymere, in denen mindestens 5% aller Stickstoffatome in Form permanent quartärer Stickstoffatome vorliegen, eine gute Löslichkeit bzw. Dispergierbarkeit in wässrigen Medien aufweisen, wodurch diese, ohne die Verwendung von ökologisch bedenklichen organischen Lösungsmitteln, appliziert werden können

Ein erster Gegenstand der vorliegenden Erfindung ist daher ein kationisches Benzoxazin(co)polymer, in dem mindestens 5% aller Stickstoffatome, bezogen auf die Gesamtanzahl aller Stickstoffatome im kationischen Benzoxazin(co)polymer, in Form permanent quartärer Stickstoffatome vorliegen, mit der Massgabe, dass diese permanent quartären Stickstoffatome eine vom pH-Wert unabhängige, nicht durch Protonierung des Stickstoffatoms gebildete, positive Formalladung aufweisen.

Ein weiterer Gegenstand der vorliegenden Erfindung ist ein Verfahren zur Herstellung des erfindungsgemäßen kationischen Benzoxazin(co)polymers, umfassend die Schritte:
a) Bereitstellung mindestens einer polymerisierbaren Benzoxazin-Verbindung;
b) Herstellung eines nicht-kationischen Benzoxazin(co)polymers durch Polymerisation mindestens einer polymerisierbaren Benzoxazin-Verbindung unter geeigneten Polymerisationsbedingungen, wobei ein nicht-kationisches Benzoxazin(co)polymer in der Weise definiert ist, dass weniger als 1% seiner Stickstoffatome, bezogen auf die Gesamtanzahl aller Stickstoffatome im nicht-kationischen Benzoxazin(co)polymer, in Form permanent quartärer Stickstoffatome vorliegen, und
c) Umsetzung des in Schritt b) erhaltenen nicht-kationischen Benzoxazin(co)polymers mit mindestens einem Alkylierungsmittel, wobei die Menge des mindestens einen Alkylierungsmittels so gewählt wird, dass mindestens 5% aller Stickstoffatome, bezogen auf die Gesamtanzahl aller Stickstoffatome im nicht-kationischen Benzoxazin(co)polymer, in permanent quartäre Stickstoffatome überführt werden, mit der Massgabe, dass diese permanent quartären Stickstoffatome eine vom pH-Wert unabhängige, nicht durch Protonierung des Stickstoffatoms gebildete, positive Formalladung aufweisen.

Die kationischen Benzoxazin(co)polymere der vorliegenden Erfindung besitzen in der Regel eine gute Löslichkeit in wässrigen Medien, weshalb die genannten Polymere in wasserbasierten Formulierungen eingesetzt werden können, die im Wesentlichen frei von organischen Lösungsmitteln sind. Außerdem weisen die erfindungsgemäßen kationischen Benzoxazin(co)polymere ein gutes Wechselwirkungsvermögen mit einer ganzen Reihe unterschiedlicher Oberflächen auf, wodurch die genannten Polymere zur Beschichtung oder Modifizierung von Oberflächen verwendet werden können.

Die erfindungsgemäßen kationischen Benzoxazin(co)polymere sind in besonderer Weise dazu geeignet als Bestandteil von Textil- oder Oberflächenbehandlungsmitteln die Schmutzablösung von textilen oder harten Oberflächen zu verbessern und/oder deren Wiederanschmutzbarkeit zu reduzieren.

Ein weiterer Gegenstand der vorliegenden Erfindung sind daher Wasch- und Reinigungsmittel sowie Textilbehandlungsmittel, die mindestens ein erfindungsgemäßes kationisches Benzoxazin(co)polymer umfassen, sowie die Verwendung der genannten Polymere zur Verbesserung der Schmutzablösung von und/oder zur Reduzierung der Wiederanschmutzbarkeit auf textilen oder harten Oberflächen.

Die erfindungsgemäßen kationischen Benzoxazin(co)polymere können ebenfalls als Bestandteil von kosmetischen Mitteln verwendet werden.

Ein weiterer Gegenstand der vorliegenden Erfindung ist daher auch ein kosmetisches Mittel, das mindestens ein erfindungsgemäßes kationisches Benzoxazin(co)polymer umfasst sowie die Verwendung der genannten Polymere zur Haarkonditionierung und/oder zur Haarumformung.

Ein zusätzlicher Gegenstand der vorliegenden Erfindung ist ein Verfahren zur Behandlung mindestens einer Oberfläche, umfassend die Schritte:
a) Bereitstellung mindestens eines erfindungsgemäßen kationischen Benzoxazin(co)polymers in einer applizierbaren Dareichungsform,
b) Behandlung mindestens einer Oberfläche mit dem in Schritt a) bereitgestelltem kationischen Benzoxazin(co)polymer.

Darüber hinaus betrifft die vorliegende Erfindung die Verwendung der kationischen Benzoxazin(co)polymere zur Beschichtung von Oberflächen, insbesondere zur antibakteriellen Beschichtung von Oberflächen und die Verwendung der genannten Polymere als Schlichtemittel, beispielsweise als Schlichtemittel für Kohlefasern.

Die kationischen Benzoxazin(co)polymere der vorliegenden Erfindung zeichnen sich dadurch aus, dass mindestens 5% aller Stickstoffatome, bezogen auf die Gesamtanzahl aller Stickstoffatome im kationischen Benzoxazin(co)polymer, in Form permanent quartärer Stickstoffatome vorliegen.

Unter einem Benzoxazin(co)polymer ist im Sinne der vorliegenden Erfindung sowohl ein Benzoxazinhomopolymer als auch ein Benzoxazincopolymer zu verstehen. Benzoxazinhomopolymere enthalten in polymerisierter Form nur eine polymerisierbare Benzoxazin-Verbindung, während Benzoxazincopolymere mindestens zwei unterschiedliche polymerisierbare Benzoxazin-Verbindungen in polymerisierter Form enthalten.

Unter einem "kationischen Benzoxazin(co)polymer" ist im Sinne der vorliegenden Erfindung das vorgenannte Benzoxazin(co)polymer zu verstehen, dessen jeweilige Polymerkette eine resultierende kationische Gesamtladung aufweist, die insbesondere dadurch gebildet wird, dass mindestens 5% aller Stickstoffatome, bezogen auf die Gesamtanzahl aller Stickstoffatome im kationischen Benzoxazin(co)polymer, in Form permanent quartärer Stickstoffatome vorliegen.

Unter einem "permanent quartären Stickstoffatom" wird im Sinne der vorliegenden Erfindung ein Stickstoffatom verstanden, das Bestanteil des kationischen Benzoxazin(co)polymers ist und das eine, vom pH-Wert unabhängige, positive Formalladung aufweist.

Insbesondere ist unter einem "permanent quartären Stickstoffatom" im Sinne der vorliegenden Erfindung ein Stickstoffatom zu verstehen, das Bestanteil des kationischen Benzoxazin(co)polymers ist, und das aufgrund seiner kovalenten Verknüpfung mit vier weiteren Kohlenstoffatomen eine positive Formalladung aufweist.

Ein Stickstoffatom, das durch Protonierung eine positive Formalladung aufweist, ist im Sinne der vorliegenden Erfindung ausdrücklich nicht als permanent quartäres Stickstoffatom zu verstehen.

Die positive Formalladung der erfindungsgemäßen kationischen Benzoxazin(co)polymere wird durch eine entsprechende Anzahl an Anionen ausgeglichen, so dass eine neutrale Gesamtladung resultiert. Als Anionen sind besonders physiologisch verträgliche organische oder anorganische Anionen bevorzugt. Als physiologisch verträgliche Anionen kommen beispielsweise Halogenidionen, Sulfationen, Phosphationen, Methosulfationen sowie organische Ionen wie Lactat-, Citrat-, Tartrat- und Acetationen in Betracht. Bevorzugt sind Halogenidionen, insbesondere Chlorid.

Der Anteil permanent quartärer Stickstoffatome im erfindungsgemäßen kationischen Benzoxazin(co)polymer kann durch geeignete spektroskopische Methoden mit hinreichend hoher Auflösung bestimmt werden. Beispielsweise kann mit Hilfe 15N-NMR spektroskopischer Methoden der Anteil der permanent quartären Stickstoffatome ermittelt werden. Ebenfalls ist es möglich mit Hilfe 13C und/oder 1H-NMR spektroskopischer Methoden den Anteil an permanent quartären Stickstoffatomen im erfindungsgemäßen kationischen Benzoxazin(co)polymer zu ermitteln.

Durch den Anteil an permanent quartären Stickstoffatomen im erfindungsgemäßen kationischen Benzoxazin(co)polymer können wichtige Polymereigenschaften, wie beispielsweise die Löslichkeit in wässrigen Medien oder das Wechselwirkungsvermögen mit verschiedenen Oberflächen gezielt modifiziert und auf einen jeweiligen Anwendungszweck hin angepasst werden.

Für bestimmte Anwendungszwecke ist es daher vorteilhaft, wenn, bezogen auf die Gesamtanzahl aller Stickstoffatome im erfindungsgemäßen kationischen Benzoxazin(co)polymer, mindestens 5%, oder mindestens 10%, oder mindestens 15%, oder mindestens 20%, oder mindestens 25%, oder mindestens 30%, oder mindestens 35%, oder mindestens 35%, oder mindestens 40%, oder mindestens 45%, oder mindestens 50%, oder mindestens 55%, oder mindestens 60%, oder mindestens 65%, oder mindestens 70%, oder mindestens 75%, oder mindestens 80%, oder mindestens 85%, oder mindestens 90%, oder mindestens 95% aller Stickstoffatome im jeweiligen kationischen Benzoxazin(co)polymer in Form permanent quartärer Stickstoffatome vorliegen.

In einer Ausführungsform der vorliegenden Erfindung liegen 5 bis 99%, vorzugsweise 10 bis 80% und insbesondere 20 bis 60% aller Stickstoffatome des erfindungsgemäßen kationischen Benzoxazin(co)polymers in Form permanent quartärer Stickstoffatome vor, jeweils bezogen auf die Gesamtanzahl aller Stickstoffatome im kationischen Benzoxazin(co)polymer.

Benzoxazin(co)polymere, die, bezogen auf die Gesamtanzahl aller Stickstoffatome im Benzoxazin(co)polymer, einen Anteil von weniger als 5% an permanent quartären Stickstoffatomen aufweisen, besitzen in der Regel nur eine ungenügende Löslichkeit bzw. Dispergierbarkeit in wässrigen Medien. Weiterhin ist das Wechselwirkungsvermögen der genannten Polymere mit einer Vielzahl von Oberflächen oft unzureichend.

In einer besonderen Ausführungsform der vorliegenden Erfindung wird das kationische Benzoxazin(co)polymer durch ein Verfahren hergestellt, das die folgenden Schritte umfasst:
a) Bereitstellung mindestens einer polymerisierbaren Benzoxazin-Verbindung;
b) Herstellung eines nicht-kationischen Benzoxazin(co)polymers durch Polymerisation mindestens einer polymerisierbaren Benzoxazin-Verbindung unter geeigneten Polymerisationsbedingungen, und
c) Umsetzung des in Schritt b) erhaltenen nicht-kationischen Benzoxazin(co)polymers mit mindestens einem Alkylierungsmittel, wobei die Menge des mindestens einen Alkylierungsmittels so gewählt wird, dass mindestens 5% aller Stickstoffatome, bezogen auf die Gesamtanzahl aller Stickstoffatome im nicht-kationischen Benzoxazin(co)polymer, in permanent quartäre Stickstoffatome überführt werden, mit der Massgabe, dass diese permanent quartären Stickstoffatome eine vom pH-Wert unabhängige, nicht durch Protonierung des Stickstoffatoms gebildete, positive Formalladung aufweisen.

Unter einem nicht-kationischen Benzoxazin(co)polymer ist im Sinne der vorliegenden Erfindung ein Polymer zu verstehen, indem weniger als 1%, vorzugsweise weniger als 0,5%, besonders bevorzugt weniger als 0,1% und ganz besonders bevorzugt weniger als 0,01% aller Stickstoffatome, bezogen auf die Gesamtanzahl aller Stickstoffatome im nicht-kationischen Benzoxazin(co)polymer, in Form permanent quartärer Stickstoffatome vorliegen.

Bevorzugte Benzoxazin-Verbindungen sind Monomere, die zumindest eine Benzoxazingruppe umfassen. Bevorzugte Monomere können vorzugsweise bis zu vier Benzoxazingruppen umfassen, wobei sowohl einzelne Monomere als auch Mischungen von zwei oder mehr Monomeren verwendet werden können.

In einer besonderen Ausführungsform der vorliegenden Erfindung wird die mindestens eine polymerisierbare Benzoxazin-Verbindung ausgewählt aus Verbindungen der allgemeinen Formel (I) und/oder aus Verbindungen der allgemeinen Formel (II), 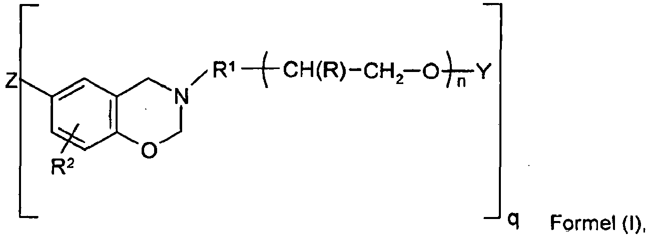 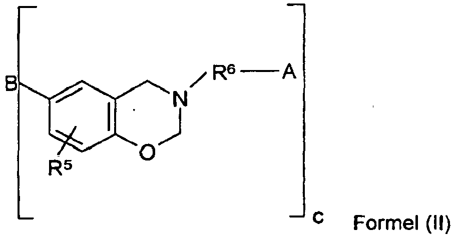 wobei q eine ganze Zahl von 1 bis 4 ist, n eine Zahl von 2 bis 20000, vorzugsweise von 3 bis 10000, besonders bevorzugt von 4 bis 8000 und insbesondere von 5 bis 7000 ist, R in jeder Wiederholungseinheit unabhängig voneinander ausgewählt wird aus Wasserstoff oder linearen oder verzweigten, gegebenenfalls substituierten Alkylgruppen, die 1 bis 8 Kohlenstoffatome umfassen, Z ausgewählt wird aus Wasserstoff (für q = 1), Alkyl (für q = 1), Alkylen (für q = 2 bis 4), Carbonyl (für q = 2), Sauerstoff (für q = 2), Schwefel (für q = 2), Sulfoxid (für q = 2), Sulfon (für q = 2) und einer direkten, kovalenten Bindung (für q = 2), R¹ für eine kovalente Bindung steht oder eine divalente Verbindungsgruppe ist, die 1 bis 100 Kohlenstoffatome umfasst, R² ausgewählt wird aus Wasserstoff, Halogen, Alkyl und Alkenyl oder R² ein divalenter Rest ist, der aus der Benzoxazin-Struktur eine entsprechende Naphthoxazin-Struktur macht, Y ausgewählt wird aus linearen oder verzweigten, gegebenenfalls substituierten Alkylgruppen, die 1 bis 15 Kohlenstoffatomen umfassen, cycloaliphatischen Resten, die gegebenenfalls ein oder mehrere Heteroatome enthalten, Arylresten, die gegebenenfalls ein oder mehrere Heteroatome enthalten und *-(C=O)R³, wobei R³ aus linearen oder verzweigten, gegebenenfalls substituierten Alkylgruppen mit 1 bis 15 Kohlenstoffatomen und X-R⁴ ausgewählt wird, wobei X aus S, O, und NH ausgewählt wird und R⁴ aus linearen oder verzweigten, gegebenenfalls substituierten Alkylgruppen mit 1 bis 15 Kohlenstoffatomen ausgewählt wird,
c eine ganze Zahl von 1 bis 4 ist,
B ausgewählt wird aus Wasserstoff (für c = 1), Alkyl (für c = 1), Alkylen (für c = 2 bis 4), Carbonyl (für c = 2), Sauerstoff (für c = 2), Schwefel (für c = 2), Sulfoxid (für c = 2), Sulfon (für c = 2) und einer direkten, kovalenten Bindung (für c = 2), A eine Hydroxylgruppe oder ein stickstoffhaltiger Heterozyklus ist,
R⁵ ausgewählt wird aus Wasserstoff, Halogen, Alkyl und Alkenyl oder R⁵ ein divalenter Rest ist, der aus der Benzoxazin-Struktur eine entsprechende Naphthoxazin-Struktur macht und R⁶ für eine kovalente Bindung steht oder eine divalente Verbindungsgruppe ist, die 1 bis 100 Kohlenstoffatome umfasst.

In einer Ausführungsform der Erfindung wird in Formel (I) R in jeder Wiederholungseinheit unabhängig voneinander ausgewählt aus Wasserstoff und Methyl.

Die divalenten organischen Verbindungsgruppen R¹ in Formel (I) und/oder R⁶ in Formel (II) umfassen vorzugsweise 2 bis 50, besonders bevorzugt 2 bis 25 und insbesondere 2 bis 20 Kohlenstoffatome. Weiterhin können die divalenten organischen Verbindungsgruppen R¹ und R⁶ jeweils aus linearen oder verzweigten, gegebenenfalls substituierten Alkylengruppen ausgewählt werden, die 1 bis 15 Kohlenstoffatome umfassen, wobei die Alkylengruppen gegebenenfalls durch mindestens ein Heteroatom ausgewählt aus Sauerstoff, Schwefel oder Stickstoff unterbrochen sind.

Unter dem Begriff "unterbrochen" wird im Sinne der vorliegenden Erfindung verstanden, dass in einer divalenten Alkylengruppe mindestens ein nicht-terminales Kohlenstoffatom der genannten Gruppe durch ein Heteroatom ersetzt wird, wobei das Heteroatom vorzugsweise ausgewählt wird aus *--S--* (Schwefel), *--O--* (Sauerstoff), und *--NR^{a}--* (Stickstoff), wobei R^{a} insbesondere für Wasserstoff oder für eine linearen oder verzweigten, gegebenenfalls substituierten Alkylgruppen mit 1 bis 15 Kohlenstoffatomen steht.

Vorzugsweise werden die divalenten organischen Verbindungsgruppen R¹ und/oder R⁶ aus Alkylengruppen ausgewählt, die 2 bis 8 C-Atome umfassen. In einer bevorzugten Ausführungsform wird R¹ und/oder R⁶ aus linearen Alkylengruppen ausgewählt, die 2 bis 6, insbesondere 2 oder 3 Kohlenstoffatome umfassen, wie beispielsweise Ethylen-, Propylen-, Butylen-, Pentylen- und Hexylengruppen. Alternativ dazu kann R¹ in Formel (I) und/oder R⁶ in Formel (II) für eine kovalente Bindung stehen.

Darüber hinaus können die divalenten organischen Verbindungsgruppen R¹ und/oder R⁶ mindestens eine Arylengruppe und/oder mindestens eine Biphenylenguppe umfassen, die vorzugsweise jeweils 6 bis 12 Kohlenstoffatome beinhaltet. Die Arylengruppen und Biphenylenguppen können substituiert oder unsubstituiert vorliegen, wobei geeignete Substituenten beispielsweise ausgewählt werden aus Alkyl-, Alkenyl-, Halogen-, Amin, Thiol-, Carboxyl- und Hydroxylgruppen. Weiterhin kann mindestens ein Kohlenstoffatom des aromatischen Ringsystems der genannten Gruppen durch ein Heteroatom ersetzt sein, wobei das Heteroatom vorzugsweise aus Sauerstoff, Stickstoff und Schwefel ausgewählt wird.

Die Reste R² und R⁵ in Formel (I) und Formel (II) stehen vorzugsweise jeweils für Wasserstoff und Methyl.

Der Rest A in Formel (II) steht für eine Hydroxylgruppe oder einen stickstoffhaltigen Heterozyklus. Unter dem Begriff "stickstoffhaltiger Heterozyklus" werden im Sinne der vorliegenden Erfindung insbesondere solche Ringsysteme verstanden, die 3 bis 8 Ringatome, vorzugsweise 5 bis 6 Ringatome beinhalten, wobei das Ringsystem mindestens ein Stickstoffatom und mindestens zwei Kohlenstoffatome umfasst. Der genannte stickstoffhaltige Heterozyklus kann eine gesättigte, ungesättigte oder aromatische Struktur aufweisen und neben den vorgenannten Atomen auch weitere Heteroatome, wie beispielsweise Schwefel- und/oder Sauerstoffatome umfassen.

Der stickstoffhaltige Heterozyklus ist gemäß Formel (II) über die divalente Verbindungsgruppe R⁶ mit dem Stickstoffatom des Oxazinrings der Benzoxazinstruktur verbunden. Die divalente Verbindungsgruppe R⁶ kann mit jedem Stickstoff- oder Kohlenstoffringatom des stickstoffhaltigen Heterozyklus verknüpft sein, indem R⁶ ein mit einem Stickstoff- oder Kohlenstoffringatom kovalent verbundenes Wasserstoffatom formal ersetzt.

Besonders bevorzugte stickstoffhaltige Heterozyklen werden beispielsweise ausgewählt aus 5- gliedrigen stickstoffhaltigen Heterozyklen, wie etwa Imidazolen, Imidazolidonen, Tetrazolen, Oxazolen, Pyrrolen, Pyrrolidinen und Pyrazolen oder 6-gliedrigen stickstoffhaltigen Heterozyklen, wie etwa Piperidinen, Piperidonen, Piperazinen, Pyridinen, Diazinen und Morpholinen.

In einer bevorzugten Ausführungsform der vorliegenden Erfindung werden die polymerisierbaren Benzoxazin-Verbindungen der allgemeinen Formel (I) ausgewählt aus Verbindungen der allgemeinen Formel (III), 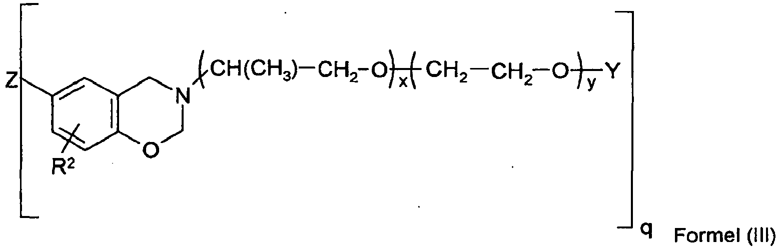 wobei x eine Zahl zwischen 0 und 1000 und y eine Zahl zwischen 0 und 1000 ist, mit der Maßgabe, dass x+y ≥ 2 ist, wobei Z, R², Y und q jeweils wie oben definiert sind.
Vorzugsweise ist x+y ≥ 3, besonders bevorzugt ≥ 4 und ganz besonders bevorzugt ≥ 5.

Je nach Anwendungsprofil ist es zweckmäßig, die Anzahl der Alkylenoxid-Einheiten der Alkylenoxid-Kette in den polymerisierbaren Benzoxazin-Verbindung der allgemeinen Formel (I) und (III) anzupassen. In bestimmten Ausführungsformen der Erfindung nimmt n und/oder x+y daher als Untergrenze einen Wert von mindestens 3, 4, 6, 10, 12, 14, 16, 18, 20, 25, 30, 35, 40, 50, 60, 80, 100, 150 oder 200 an.

Eine zweckmäßige Obergrenze für n und/oder x+y liegt in den erfindungsgemäßen Benzoxazin-Verbindungen der allgemeinen Formel (I) oder (III) vorzugsweise bei einem Wert von maximal 10000, 2000, 1800, 1600, 1400, 1200, 1000, 800, 600 oder 400.

In einer weiteren bevorzugten Ausführungsform der vorliegenden Erfindung werden die Benzoxazin-Verbindungen der allgemeinen Formel (II) ausgewählt aus Verbindungen der allgemeinen Formel (IV) und/oder aus Verbindungen der allgemeinen Formel (V), 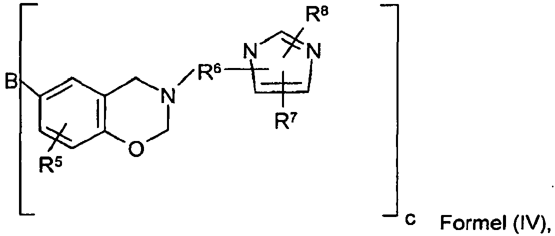 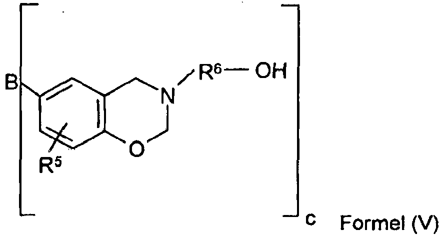 wobei R⁷ und R⁸ jeweils unabhängig voneinander ausgewählt werden aus Wasserstoff, Halogen, linearen oder verzweigten, gegebenenfalls substituierten Alkylgruppen, Alkenylgruppen und Arylgruppen, wobei c, B, R⁵ und R⁶ jeweils wie oben definiert sind.

In einer weiteren Ausführungsform der Erfindung werden R⁷ und R⁸ in Formel (IV) unabhängig voneinander ausgewählt aus Wasserstoff, Methyl, Ethyl, n-Propyl, iso-Propyl, n-Butyl, sec-Butyl und isoButyl, wobei R⁷ und R⁸ insbesondere für Wasserstoff oder Methyl stehen.

Besonders bevorzugte Benzoxazin-Verbindungen der allgemeinen Formel (IV) werden aus den folgenden Benzoxazin-Verbindungen ausgewählt: 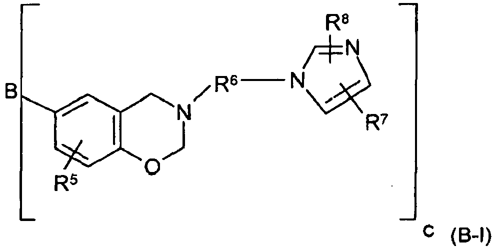 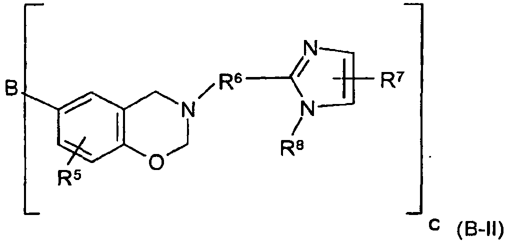 wobei c, B, R⁵, R⁶, R⁷ und R⁸ wie oben definiert sind.

Spezifische Benzoxazin-Verbindungen der allgemeinen Formel (IV) können exemplarisch aus den folgenden Verbindungen ausgewählt werden:

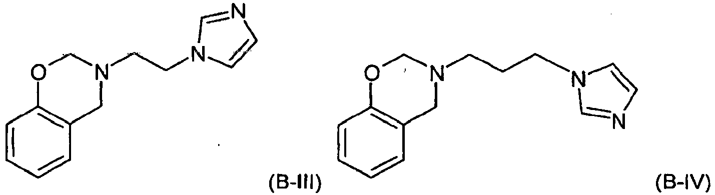

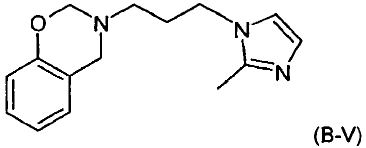

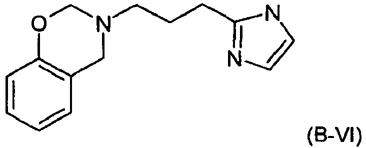

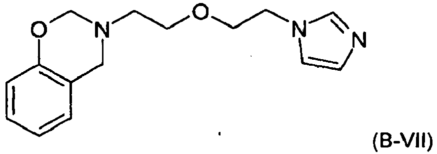

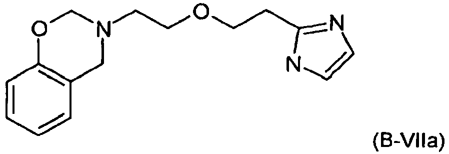

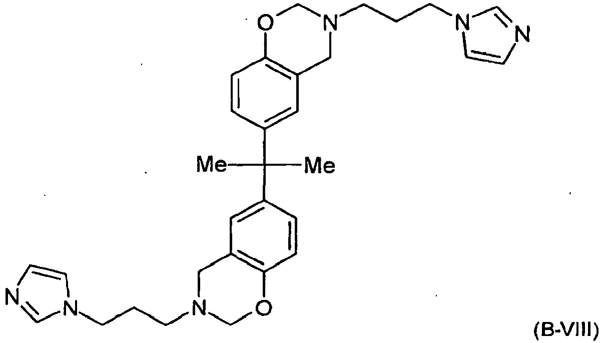

Die gezeigten Benzoxazin-Verbindungen, die einen Imdizaolring als stickstoffhaltigen Heterozyklus tragen, können beispielsweise durch die Umsetzung einer phenolischen Verbindung mit einem Aldehyd, wie beispielsweise Formaldehyd und einer Aminoalkylimidazol-Verbindung erhalten werden.

Geeignete phenolische Verbindungen können beispielsweise aus mono- oder biphenolischen Verbindungen, wie etwa Phenol, Bisphenol A, Bisphenol F, Bisphenol S oder Thiodiphenol ausgewählt werden.

Als Aldehyd können neben Formaldehyd auch Paraformalehyd, Trioxan oder Polyoxymethylen oder deren beliebige Mischungen verwendet werden.

Bevorzugte Aminoalkylimidazol-Verbindung weisen insbesondere eine primäre Aminogruppe auf und können beispielsweise aus Verbindungen allgemeine Formel (VI) ausgewählt werden, 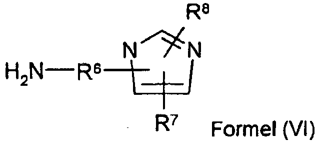 wobei R⁶, R⁷ und R⁸ wie oben definiert sind.

Insbesondere sind 1-Aminoalkylimidazol-Verbindungen der allgemeinen Formel (VII), 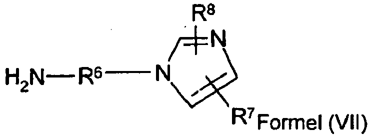 oder 2-Aminoalkylimidazol-Verbindungen der allgemeinen Formel (VIII) 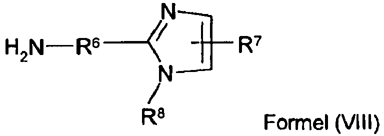 zur Herstellung der entsprechenden Benzoxazin-Verbindungen geeignet, wobei R⁶, R⁷ und R⁸ wie oben definiert sind.

Im Sinne der vorliegenden Erfindung geeignete 1-Aminoalkylimidazol-Verbindung der allgemeinen Formel (VII) sind aus dem Stand der Technik bekannt und kommerziell verfügbar. Beispiele sind etwa 1-(3-Aminopropyl)imidazol, erhältlich unter dem Handelsnamen Lupragen® API von der BASF SE, 3-Imidazol-1-yl-2-methyl-propylamin (ChemPacific), 2-Methyl-1H-imidazol-1-propanamin (3B Scientific Corporation), 3-Imidazol-1-yl-2-hydroxy-propylamin (Ambinter, ParisCollection), 1-(4-Aminobutyl)imidazol (Ambinter, ParisCollection), 2-Ethyl-1H-imidazol-1-propanamin (ChemBridge Corp.).

Neben der Verwendung kommerziell verfügbarer 1-Aminoalkylimidazol-Verbindungen der allgemeinen Formel (VII) können diese auch mit Hilfe gängiger Methoden der organischen Synthese hergestellt werden, wie beispielsweise durch ein Verfahren, das im Houben-Weyl, Methoden der organischen Chemie Vol. E 16d, Georg-Thieme-Verlag Stuttgart, 1992 auf den Seiten 755 ff. beschrieben ist.

2-Aminoalkylimidazol-Verbindungen der allgemeinen Formel (VIII) sind ebenfalls aus dem Stand der Technik bekannt. Die Herstellung kann mit Hilfe gängiger organischer Syntheseverfahren erfolgen. Eine praktikable Synthese ist beispielsweise in Tetrahedron 2005, Vol. 61, auf den Seiten 11148 bis 11155 beschrieben.

Spezifische Benzoxazin-Verbindungen der allgemeinen Formel (V) können exemplarisch aus den folgenden Verbindungen ausgewählt werden:

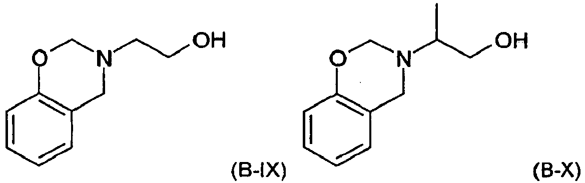

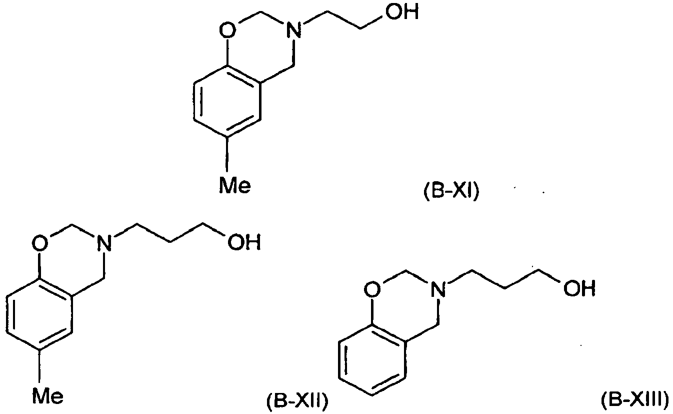

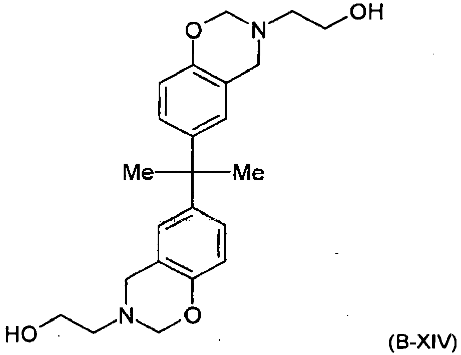

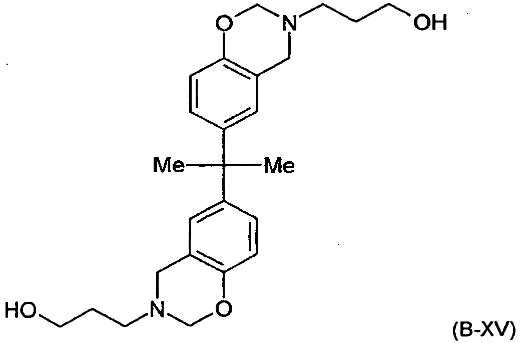

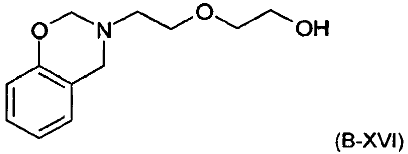

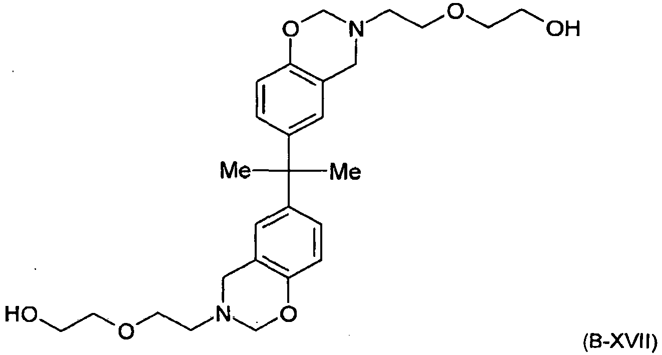

Die gezeigten Benzoxazin-Verbindungen, die eine freie Hydroxylgruppe tragen, können durch jede gängige Synthesemethode erhalten werden, wie beispielsweise durch ein Verfahren, das in der japanischen Patentanmeldung JP 2002-302486 auf der Seite 11 in den Zeilen 66 bis 100 beschrieben wird. Die genannte Methode beruht auf der Umsetzung einer phenolischen Verbindung mit einem Aldehyd, wie beispielsweise Formaldehyd und einem Aminoalkohol. Die Reaktionszeit kann dabei von einigen Minuten bis zu einigen Stunden variieren und hängt stark von der jeweiligen Reaktivität der einzelnen Reaktanten ab.

Eine weitere Methode zur Herstellung der gezeigten Benzoxazin-Verbindungen, die eine freie Hydroxylgruppe tragen, wird von Kiskan and Yagci in Polymer 46 (2005), Seite 11690 bis 11697 und von Kiskan, Yagci und Ishida im Journal of Polymer Science: Part A: Polymer Chemistry (2008), Vol. 46, auf den Seiten 414- 420 beschrieben.

Geeignete phenolische Verbindungen können beispielsweise aus mono- oder biphenolischen Verbindungen, wie etwa Phenol, Bisphenol A, Bisphenol F, Bisphenol S oder Thiodiphenol ausgewählt werden.

Als Aldehyd können neben Formaldehyd auch Paraformalehyd, Trioxan oder Polyoxymethylen oder deren beliebige Mischungen verwendet werden.

Geeignete Aminoalkohole, wie etwa 2-Aminoethanol, 3-Amino-1-propanol, Amino-2-propanol, 4-Amino-1-butanol, 2-Amino-1-butanol, 4-Amino-2-butanol, 5-Amino-1-pentanol, 6-Amino-1-hexanol, 7-Amino-1-heptanol, 3-Amino-1,2-propandiol, 2-(2-Aminoethoxy)ethanol und 2-Amino-1,3-propandiol sind kommerziell verfügbar und können beispielsweise von Sigma-Aldrich bzw. Tokyo Chemical Industry bezogen werden.

Die vorgenannten polymerisierbaren Benzoxazin-Verbindungen können sowohl alleine als auch in jeder möglichen Kombination zur Herstellung des erfindungsgemäßen kationischen Benzoxazin(co)polymers verwendet werden, wobei wichtige Stoffeigenschaften über das jeweilige Mischungsverhältnis der einzelnen polymerisierbaren Benzoxazin-Verbindungen zueinander beeinflusst werden können.

In einer Ausführungsform der vorliegenden Erfindung wird zur Herstellung des erfindungsgemäßen kationischen Benzoxazin(co)polymers daher eine Mischung bereitgestellt, die
- mindestens eine polymerisierbare Benzoxazin-Verbindung der allgemeinen Formel (I), vorzugsweise mindestens eine polymerisierbare Benzoxazin-Verbindung der allgemeinen Formel (III) und
- mindestens eine polymerisierbare Benzoxazin-Verbindung der allgemeinen Formel (II) umfasst.

Das Gewichtsverhältnis der mindestens einen polymerisierbaren Benzoxazin-Verbindung der allgemeinen Formel (I) zur mindestens einen polymerisierbaren Benzoxazin-Verbindung der allgemeinen Formel (II) liegt dabei vorzugsweise zwischen 10:1 und 1:10, besonders bevorzugt zwischen 5:1 und 1:5 und insbesondere zwischen 2:1 und 1:2, wobei für bestimmte Anwendungszwecke ein Gewichtsverhältnis von 1:1 zweckmäßig ist.

In einer speziellen Ausführungsform der vorliegenden Erfindung wird zur Herstellung des erfindungsgemäßen kationisches Benzoxazin(co)polymers eine Mischung bereitgestellt, die
- mindestens eine polymerisierbare Benzoxazin-Verbindung der allgemeinen Formel (I), vorzugsweise mindestens eine polymerisierbare Benzoxazin-Verbindung der allgemeinen Formel (III) und
- mindestens eine polymerisierbare Benzoxazin-Verbindung der allgemeinen Formel (IV) umfasst.

Das Gewichtsverhältnis der mindestens einen polymerisierbaren Benzoxazin-Verbindung der allgemeinen Formel (I) zur mindestens einen polymerisierbaren Benzoxazin-Verbindung der allgemeinen Formel (IV) liegt dabei vorzugsweise zwischen 10:1 und 1:10, besonders bevorzugt zwischen 5:1 und 1:5 und insbesondere zwischen 2:1 und 1:2, wobei für bestimmte Anwendungszwecke ein Gewichtsverhältnis von 1:1 zweckmäßig ist.

In einer weiteren speziellen Ausführungsform der vorliegenden Erfindung wird zur Herstellung des erfindungsgemäßen kationisches Benzoxazin(co)polymers eine Mischung bereitgestellt, die
- mindestens eine polymerisierbare Benzoxazin-Verbindung der allgemeinen Formel (I), vorzugsweise mindestens eine polymerisierbare Benzoxazin-Verbindung der allgemeinen Formel (III) und
- mindestens eine polymerisierbare Benzoxazin-Verbindung der allgemeinen Formel (V) umfasst.

Das Gewichtsverhältnis der mindestens einen polymerisierbaren Benzoxazin-Verbindung der allgemeinen Formel (I) zur mindestens einen polymerisierbaren Benzoxazin-Verbindung der allgemeinen Formel (V) liegt dabei vorzugsweise zwischen 10:1 und 1:10, besonders bevorzugt zwischen 5:1 und 1:5 und insbesondere zwischen 2:1 und 1:2, wobei für bestimmte Anwendungszwecke ein Gewichtsverhältnis von 1:1 zweckmäßig ist.

Für besondere Anwendungszwecke kann es sinnvoll sein, dass mehr als zwei unterschiedliche Benzoxazin-Verbindungen zur Herstellung des erfindungsgemäßen kationischen Benzoxazin(co)polymers verwendet werden.

Die vorgenannten Mischungen, die die genannten polymerisierbaren Benzoxazin-Verbindungen umfassen, bestehen in einer besonders bevorzugten Ausführungsform der Erfindung aus den genannten polymerisierbaren Benzoxazin-Verbindungen.

Darüber hinaus kann es vorteilhaft sein, dass neben den bereits beschriebenen polymerisierbaren Benzoxazin-Verbindungen weitere polymerisierbare Benzoxazin-Verbindungen zur Herstellung des erfindungsgemäßen kationischen Benzoxazin(co)polymers verwendet werden, die sich von den vorgenannten polymerisierbare Benzoxazin-Verbindungen unterscheiden.

Geeignete Benzoxazin-Verbindungen werden vorzugsweise durch Formel (B-XVIII) beschrieben, 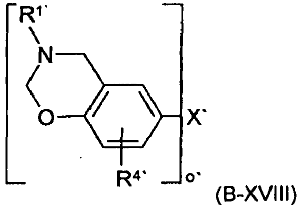 wobei o' eine ganze Zahl zwischen 1 und 4 ist, X' ausgewählt wird aus der Gruppe bestehend aus Alkyl (für o' = 1), Alkylen (für o' = 2 bis 4), Sauerstoff (für o' = 2), Thiol (für o' = 1), Schwefel (für o' = 2), Sulfoxid (für o' = 2), Sulfon (für o' = 2) und einer direkten, kovalenten Bindung (für o' = 2), R^{1'} ausgewählt wird aus der Gruppe bestehend aus Wasserstoff, Alkyl, Alkenyl und Aryl und R^{4'} ausgewählt wird aus der Gruppe bestehend aus Wasserstoff, Halogen, Alkyl und Alkenyl, oder R^{4'} ein divalenter Rest ist, der aus der Benzoxazin-Struktur eine entsprechende Naphthoxazin-Struktur macht.

Bevorzugte Benzoxazin-Verbindungen sind weiterhin Verbindungen der allgemeinen Formel (B-IXX), 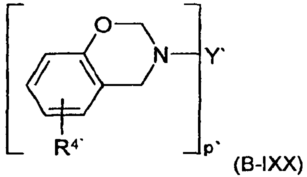 wobei p' = 2 ist und Y' ausgewählt wird aus der Gruppe bestehend aus Biphenyl, Diphenylmethan, Diphenylisopropan, Diphenylsulfid, Diphenylsulfoxid, Diphenylsulfon, Diphenylketon und R^{4'} ausgewählt wird aus der Gruppe bestehend aus Wasserstoff, Halogen, Alkyl und Alkenyl, oder R^{4'} ein divalenter Rest ist, der aus der Benzoxazin-Struktur eine entsprechende Naphthoxazin-Struktur macht.

Ebenfalls bevorzugte Benzoxazin-Verbindungen sind weiterhin Verbindungen der allgemeinen Formel (B-XX) bis (B-XXII), 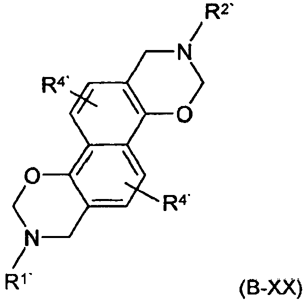 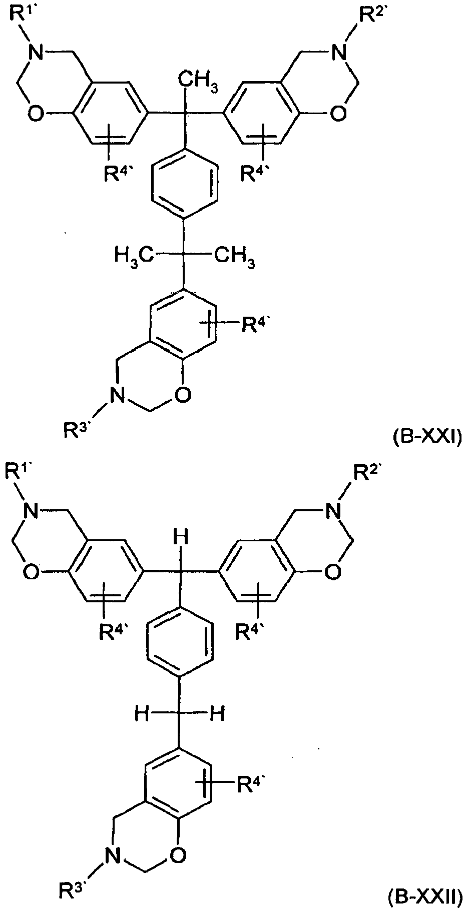 wobei R^{1'} und R^{4'} wie oben definiert sind und R^{3'} sowie R^{2'} wie R^{1'} definiert sind.

Die gezeigten Benzoxazin-Verbindungen sind kommerziell erhältlich und werden u.a. von Huntsman Advanced Materials; Georgia-Pacific Resins, Inc. und Shikoku Chemicals Corporation, Chiba, Japan vertrieben.

Ungeachtet dessen können die Benzoxazin-Verbindungen auch durch Umsetzung einer phenolischen Verbindung, etwa Bisphenol A, Bisphenol F, Bisphenol S oder Thiophenol mit einem Aldehyd, etwa Formaldehyd, in Gegenwart eines primären Amins erhalten werden.

Geeignete Herstellverfahren werden beispielsweise im US-Patent 5543516, insbesondere in den Beispielen 1 bis 19 in den Spalten 10 bis 14 offenbart, wobei die Reaktionszeit der entsprechenden Umsetzung je nach Konzentration, Reaktivität und Reaktionstemperatur von einigen Minuten bis zu einigen Stunden dauern kann. Weitere Herstellungsmöglichkeiten können den US-Patenten 4607091, 5021484, 5200452 und 5443911 entnommen werden.

Wie bereits oben ausgeführt erfolgt die Herstellung des erfindungsgemäßen kationischen Benzoxazin(co)polymers durch Umsetzung eines nicht-kationischen Benzoxazin(co)polymers mit mindestens einem Alkylierungsmittel.

Das nicht-kationische Benzoxazin(co)polymer wird dabei durch die Polymerisation mindestens einer der genannten Benzoxazin-Verbindung unter geeigneten Polymerisationsbedingungen erhalten. Vorzugsweise werden dabei Mischungen zweier oder mehrerer der oben gezeigten polymerisierbaren Benzoxazin-Verbindungen verwendet, so dass es sich bei dem erfindungsgemäßen Benzoxazin(co)polymer insbesondere um ein Copolymer zweier oder mehrerer Benzoxazin-Verbindungen handelt.

Unter "geeigneten Polymerisationsbedingungen" sind im Sinne der vorliegenden Erfindung insbesondere solche Bedingungen zu verstehen, die geeignet sind die mindestens eine polymerisierbare Benzoxazin-Verbindung in das entsprechende Polymer zu überführen.

Die Polymerisation der polymerisierbaren Benzoxazin-Verbindung oder der Mischung verschiedener polymerisierbarer Benzoxazin-Verbindungen zum nicht-kationsichen Benzoxazin(co)polymer kann bei erhöhten Temperaturen nach einem selbst-initiierenden Mechanismus (thermische Polymerisation) oder durch Zugabe von kationischen Initiatoren erfolgen.

Geeignete kationische Initiatoren sind beispielsweise Lewissäuren oder andere kationische Initiatoren, wie beispielsweise Metallhalogenide, Organometall-Reagenzien, wie Metalloporphyrine, Methyltosylate, Methyltriflate oder Trifluorsulfonsäuren. Ebenso können basische Reagenzien verwendet werden, um die Polymerisation der polymerisierbaren Benzoxazin-Verbindung oder der Mischung verschiedener polymerisierbarer Benzoxazin-Verbindungen zu initiieren. Geeignete basische Reagenzien können beispielsweise ausgewählt werden aus Imidazol oder Imidazolderivaten.

Vorzugsweise erfolgt die thermische Polymerisation der mindestens einen polymerisierbaren Benzoxazin-Verbindung bei Temperaturen von 150 bis 300°C, insbesondere bei Temperaturen von 160 bis 220°C. Durch die Verwendung der oben genannten Initiatoren und/oder anderer Reagenzien kann die Polymerisationstemperatur auch niedriger liegen.

Der Polymerisationsvorgang beruht dabei im Wesentlichen auf der thermisch-induzierten Ringöffnung des Oxazinrings eines Benzoxazinsystems.

Die Alkylierung des nicht-kationischen Benzoxazin(co)polymers (Schritt c) zur Herstellung des erfindungsgemäßen kationischen Benzoxazin(co)polymers kann in an sich bekannter Weise durchgeführt werden. Hierzu wird das nicht-kationische Benzoxazin(co)polymer entweder als Reinsubstanz oder als Lösung bzw. als Dispersion oder Emulsion vorgelegt und mit dem jeweiligen Alkylierungsmittel oder einer Mischung verschiedener Alkylierungsmittel versetzt. Die Reaktion kann in alkoholischer Lösung, beispielsweise in Ethanol oder Isopropanol durchgeführt werden, wobei es ebenfalls möglich ist in Gegenwart inerter Emulgatoren bzw. Dispergatoren zu arbeiten.

Dabei sind die jeweiligen Reaktionsbedingungen und die Menge an Alkylierungsmittel so zu wählen, dass mindestens 5% aller Stickstoffatome, bezogen auf die Gesamtanzahl aller Stickstoffatome im nicht-kationischen Benzoxazin(co)polymer, in permanent quartäre Stickstoffatome überführt werden. Insbesondere sind die jeweiligen Reaktionsbedingungen und die Menge an Alkylierungsmittel so zu wählen, dass mindestens 10%, oder mindestens 15%, oder mindestens 20%, oder mindestens 25%, oder mindestens 30%, oder mindestens 35%, oder mindestens 35%, oder mindestens 40%, oder mindestens 45%, oder mindestens 50%, oder mindestens 55%, oder mindestens 60%, oder mindestens 65%, oder mindestens 70%, oder mindestens 75%, oder mindestens 80%, oder mindestens 85%, oder mindestens 90%, oder mindestens 95% aller Stickstoffatome in permanent quartäre Stickstoffatome überführt werden.

Als Alkylierungsmittel kommen in diesem Zusammenhang vorzugsweise Alkylhalogenide, Dialkylsulfate, Dialkylcarbonate und Alkylenoxide, wie beispielsweise Ethylenoxid - letzteres in Gegenwart von Dialkylphosphaten - in Betracht. Vorzugsweise wird die Alkylierung mit Methyliodid und/oder Dialkylsulfaten durchgeführt.

Das gewichtsmittlere Molekulargewicht "M_{w}" der erfindungsgemäßen kationischen Benzoxazin(co)polymere liegt vorzugsweise zwischen 500 und 100000 g/mol, besonders bevorzugt zwischen 1000 und 100000 g/mol und ganz besonders bevorzugt zwischen 3000 und 50000 g/mol. Das gewichtsmittlere Molekulargewicht kann dabei mittels Gelpermeationschromatographie (GPC) mit Polystyrol als Standard bestimmt werden.

Je nach Wahl der Benzoxazin-Verbindungen weist das erfindungsgemäße kationische Benzoxazin(co)polymer eine lineare oder verzweigte Struktur auf. Lineare Strukturen sind auf Grund ihrer hohen Wasserlöslichkeit und ihres guten Wechselwirkungsvermögens mit einer Vielzahl von Oberflächen bevorzugt. Bestimmte verzweigte kationischen Benzoxazin(co)polymere eigenen sich beispielsweise für die Herstellung von Hydrogelen.

Ein weiterer Gegenständ der vorliegenden Erfindung ist ein Textil- oder Oberflächenbehandlungsmittel, umfassend mindestens ein erfindungsgemäßes kationisches Benzoxazin(co)polymer, sowie die Verwendung des erfindungsgemäßen kationischen Benzoxazin(co)polymers zur Verbesserung der Schmutzablösung von und/oder Reduzierung der Wiederanschmutzbarkeit auf textilen oder harfen Oberflächen.

Unter textilen Oberflächen sind im Rahmen der vorliegenden Erfindung Oberflächen textiler Flächengebilde aus Wolle, Seide, Jute, Hanf, Baumwolle, Lein, Sisal, Ramie; Rayon, Celluloseester, Polyvinylderivate, Polyolefinen, Polyamiden, Viskose oder Polyester oder deren Mischungen besonders bevorzugt. Ganz besonders bevorzugt sind im Rahmen der vorliegenden Erfindung textile Oberflächen aus Baumwolle oder Baumwollmischgeweben.

Unter harten Oberflächen sind im Rahmen der vorliegenden Erfindung besonders bevorzugt Oberflächen aus Porzellan, Glas, Keramik, Kunststoff und/oder Metall zu verstehen.

Der Gehalt des mindestens einen erfindungsgemäßen kationischen Benzoxazin(co)polymers in dem Textil- oder Oberflächenbehandlungsmittel sollte so bemessen sein, dass die mit dem genannten Mittel behandelte Oberfläche ausreichend bedeckt ist. Vorzugsweise enthält das Mittel 0,01 bis 20 Gew.%, besonders bevorzugt 0,1 bis 10 Gew.-% und insbesondere 0,5 bis 5 Gew.-% an dem erfindungsgemäßen kationischen Benzin(co)polymer oder an der Mischung verschiedener erfindungsgemäßer kationischer Benzin(co)polymere, bezogen auf die Gesamtmenge des fertigen Mittels.

Bei den Textil- oder Oberflächenbehandlungsmittel der vorliegenden Erfindung handelt es sich insbesondere um flüssige oder gelförmige Mittel.

Das Textil- oder Oberflächenbehandlungsmittel der vorliegenden Erfindung umfasst neben dem erfindungsgemäßem kationischen Benzoxazin(co)polymer oder der Mischung verschiedener kationischer Benzoxazin(co)polymere vorzugsweise auch Tenside, wobei diese insbesondere ausgewählt werden aus anionischen, kationischen, ampholytischen und nichtionischen Tensiden sowie aus deren beliebigen Gemischen.

Anionische Tenside umfassen in der Regel eine wasserlöslich machende, anionische Gruppe wie z. B. eine Carboxylat-, Sulfat-, Sulfonat- oder Phosphat-Gruppe und eine lipophile Alkylgruppe mit etwa 8 bis 30 C-Atomen. Zusätzlich können im Molekül Glykol- oder Polyglykolether-Gruppen, Ester-, Ether- und Amidgruppen sowie Hydroxylgruppen enthalten sein. Beispiele für geeignete anionische Tenside sind, jeweils in Form der Natrium-, Kalium- und Ammonium- sowie der Mono-, Di- und Trialkanolammoniumsalze mit 2 bis 4 C-Atomen in der Alkanolgruppe,
- lineare und verzweigte Fettsäuren mit 8 bis 30 C-Atomen (Seifen),
- Ethercarbonsäuren der Formel R¹³-O-(CH2-CH2O)x-CH2-COOH, in der R¹³ eine lineare Alkylgruppe mit 8 bis 30 C-Atomen und x = 0 oder 1 bis 16 ist,
- Acylsarcoside mit 8 bis 24 C-Atomen in der Acylgruppe,
- Acyltauride mit 8 bis 24 C-Atomen in der Acylgruppe,
- Acylisethionate mit 8 bis 24 C-Atomen in der Acylgruppe,
- Sulfobernsteinsäuremono- und -dialkylester mit 8 bis 24 C-Atomen in der Alkylgruppe und Sulfobernsteinsäuremono-alkylpolyoxyethylester mit 8 bis 24 C-Atomen in der Alkylgruppe und 1 bis 6 Oxyethylgruppen,
- lineare Alkansulfonate mit 8 bis 24 C-Atomen,
- lineare Alpha-Olefinsulfonate mit 8 bis 24 C-Atomen,
- Alpha-Sulfofettsäuremethylester von Fettsäuren mit 8 bis 30 C-Atomen,
- Alkylsulfate und Alkylpolyglykolethersulfate der Formel R¹⁴-O(CH₂-CH₂O)ₓ-OSO₃H, in der R¹⁴ eine bevorzugt lineare Alkylgruppe mit 8 bis 30 C-Atomen und x = 0 oder 1 bis 12 ist,
- Gemische oberflächenaktiver Hydroxysulfonate,
- sulfatierte Hydroxyalkylpolyethylen- und/oder Hydroxyalkylenpropylenglykolether,
- Sulfonate ungesättigter Fettsäuren mit 8 bis 24 C-Atomen und 1 bis 6 Doppelbindungen,
- Ester der Weinsäure und Zitronensäure mit Alkoholen, die Anlagerungsprodukte von etwa 2-15 Molekülen Ethylenoxid und/oder Propylenoxid an Fettalkohole mit 8 bis 22 C-Atomen darstellen,
- Alkyl- und/oder Alkenyletherphosphate der Formel (E1-I), 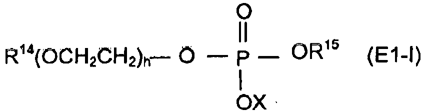 in der R¹⁴ bevorzugt für einen aliphatischen Kohlenwasserstoffrest mit 8 bis 30 Kohlenstoffatomen, R¹⁵ für Wasserstoff, einen Rest (CH₂CH₂O)ₙR¹⁶ oder X, h für Zahlen von 1 bis 10 und X für Wasserstoff, ein Alkali- oder Erdalkalimetall oder NR¹⁷R¹⁸R¹⁹R²⁰, mit R¹⁷ bis R¹⁹ unabhängig voneinander stehend für Wasserstoff oder einen C1 bis C4 - Kohlenwasserstoffrest, steht,
- sulfatierte Fettsäurealkylenglykolester der Formel (E1-II)

   R²⁰CO(AlkO)ₕSO₃M (E1-II)

   in der R²⁰CO- für einen linearen oder verzweigten, aliphatischen, gesättigten und/oder ungesättigten Acylrest mit 6 bis 22 C-Atomen, Alk für CH₂CH₂, CHCH₃CH₂ und/oder CH₂CHCH₃, h für Zahlen von 0,5 bis 5 und M für ein Kation steht,
- Monoglyceridsulfate und Monoglyceridethersulfate der Formel (E1-III) 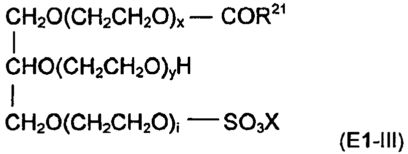 in der R²¹CO für einen linearen oder verzweigten Acylrest mit 6 bis 22 Kohlenstoffatomen, x, y und i in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel (E1-III) eingesetzt, in der R²¹CO für einen linearen Acylrest mit 8 bis 18 Kohlenstoffatomen steht,
- Amidethercarbonsäuren,
- Kondensationsprodukte aus C₈ - C₃₀ - Fettalkoholen mit Proteinhydrolysaten und/oder Aminosäuren und deren Derivaten, welche dem Fachmann als Eiweissfettsäurekondensate bekannt sind, wie beispielsweise die Lamepon^{®} - Typen, Gluadin^{®} - Typen, Hostapon^{®} KCG oder die Amisoft^{®} - Typen.

Bevorzugte anionische Tenside sind Alkylsulfate, Alkylpolyglykolethersulfate und Ethercarbonsäuren mit 10 bis 18 C-Atomen in der Alkylgruppe und bis zu 12 Glykolethergruppen im Molekül, Sulfobernsteinsäuremono- und -dialkylester mit 8 bis 18 C-Atomen in der Alkylgruppe und Sulfobernsteinsäuremono-alkylpolyoxyethylester mit 8 bis 18 C-Atomen in der Alkylgruppe und 1 bis 6 Oxyethylgruppen, Monoglycerdisulfate, Alkyl- und Alkenyletherphosphate sowie Eiweissfettsäurekondensate.

Erfindungsgemäß bevorzugt sind kationische Tenside vom Typ der quartären Ammoniumverbindungen, der Esterquats und der Amidoamine. Bevorzugte quartäre Ammoniumverbindungen sind Ammoniumhalogenide, insbesondere Chloride und Bromide, wie Alkyltrimethylammoniumchloride, Dialkyldimethylammoniumchloride und Trialkylmethylammoniumchloride, z.B. Cetyltrimethylammoniumchlorid, Stearyltrimethylammoniumchlorid, Distearyldimethylammoniumchlorid, Lauryldimethylammoniumchlorid, Lauryldimethylbenzylammoniumchlorid und Tricetylmethylammoniumchlorid, sowie die unter den INCI-Bezeichnungen Quaternium-27 und Quaternium-83 bekannten Imidazolium-Verbindungen. Die langen Alkylketten der oben genannten Tenside weisen bevorzugt 10 bis 18 Kohlenstoffatome auf.

Bei Esterquats handelt es sich um bekannte Stoffe, die sowohl mindestens eine Esterfunktion als auch mindestens eine quartäre Ammoniumgruppe als Strukturelement enthalten. Bevorzugte Esterquats sind quaternierte Estersalze von Fettsäuren mit Triethanolamin, quaternierte Estersalze von Fettsäuren mit Diethanolalkylaminen und quaternierten Estersalzen von Fettsäuren mit 1,2-Dihydroxypropyldialkylaminen. Solche Produkte werden beispielsweise unter den Warenzeichen Stepantex®, Dehyquart® und Armocare® vertrieben. Die Produkte Armocare® VGH-70, ein N,N-Bis(2-Palmitoyloxyethyl)dimethylammoniumchlorid, sowie Dehyquart® F-75, Dehyquart® C-4046, Dehyquart® L80 und Dehyquart® AU-35 sind Beispiele für solche Esterquats.

Die Alkylamidoamine werden üblicherweise durch Amidierung natürlicher oder synthetischer Fettsäuren und Fettsäureschnitte mit Dialkylaminoaminen hergestellt. Eine erfindungsgemäß besonders geeignete Verbindung aus dieser Substanzgruppe stellt das unter der Bezeichnung Tegoamid® S 18 im Handel erhältliche Stearamidopropyl-dimethylamin dar.

Neben oder statt der kationischen Tenside können die Mittel weitere Tenside oder Emulgatoren enthalten, wobei prinzipiell sowohl anionische als auch ampholytische und nichtionische Tenside und alle Arten bekannter Emulgatoren geeignet sind. Die Gruppe der ampholytischen oder auch amphoteren Tenside umfasst zwitterionische Tenside und Ampholyte. Die Tenside können bereits emulgierende Wirkung haben.

Als zwitterionische Tenside werden solche oberflächenaktiven Verbindungen bezeichnet, die im Molekül mindestens eine quartäre Ammoniumgruppe und mindestens eine -COO⁽⁻⁾ - oder -SO₃⁽⁻⁾ -Gruppe tragen. Besonders geeignete zwitterionische Tenside sind die sogenannten Betaine wie die N-Alkyl-N,N-dimethylammonium-glycinate, beispielsweise das Kokosalkyl-dimethylammoniumglycinat, N-Acyl-aminopropyl-N,N-dimethylammoniumglycinate, beispielsweise das Kokosacylaminopropyldimethylammoniumglycinat, und 2-Alkyl-3-carboxymethyl-3-hydroxyethyl-imidazoline mit jeweils 8 bis 18 C-Atomen in der Alkyl- oder Acylgruppe sowie das Kokosacylaminoethylhydroxyethylcarboxymethylglycinat. Ein bevorzugtes zwitterionisches Tensid ist das unter der INCI-Bezeichnung Cocamidopropyl Betaine bekannte Fettsäureamid-Derivat.

Unter Ampholyten werden solche oberflächenaktiven Verbindungen verstanden, die außer einer C₈ - C₂₄-Alkyl- oder -Acylgruppe im Molekül mindestens eine freie Aminogruppe und mindestens eine -COOH- oder -SO₃H-Gruppe enthalten und zur Ausbildung innerer Salze befähigt sind. Beispiele für geeignete Ampholyte sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 24 C-Atomen in der Alkylgruppe. Besonders bevorzugte Ampholyte sind das N-Kokosalkylaminopropionat, das Kokosacylaminoethylaminopropionat und das C₁₂- C₁₈ - Acylsarcosin.

Nichtionische Tenside enthalten als hydrophile Gruppe z.B. eine Polyolgruppe, eine Polyalkylenglykolethergruppe oder eine Kombination aus Polyol- und Polyglykolethergruppe. Solche Verbindungen sind beispielsweise
- Anlagerungsprodukte von 2 bis 50 Mol Ethylenoxid und/oder 1 bis 5 Mol Propylenoxid an lineare und verzweigte Fettalkohole mit 8 bis 30 C-Atomen, an Fettsäuren mit 8 bis 30 C-Atomen und an Alkylphenole mit 8 bis 15 C-Atomen in der Alkylgruppe,
- mit einem Methyl- oder C₂ - C₆ - Alkylrest endgruppenverschlossene Anlagerungsprodukte von 2 bis 50 Mol Ethylenoxid und/oder 1 bis 5 Mol Propylenoxid an lineare und verzweigte Fettalkohole mit 8 bis 30 C-Atomen, an Fettsäuren mit 8 bis 30 C-Atomen und an Alkylphenole mit 8 bis 15 C-Atomen in der Alkylgruppe, wie beispielsweise die unter den Verkaufsbezeichnungen Dehydol^{®} LS, Dehydol^{®} LT (Cognis) erhältlichen Typen,
- C₁₂-C₃₀-Fettsäuremono- und -diester von Anlagerungsprodukten von 1 bis 30 Mol Ethylenoxid an Glycerin,
- Anlagerungsprodukte von 5 bis 60 Mol Ethylenoxid an Rizinusöl und gehärtetes Rizinusöl,
- Polyolfettsäureester, wie beispielsweise das Handelsprodukt Hydagen^{®} HSP (Cognis) oder Sovermol
   - Typen (Cognis),
- alkoxilierte Triglyceride,
- alkoxilierte Fettsäurealkylester der Formel (E4-I)

   R²²CO-(OCH₂CHR²³)_{w}OR²⁴ (E4-I)

   in der R²²CO für einen linearen oder verzweigten, gesättigten und/oder ungesättigten Acylrest mit 6 bis 22 Kohlenstoffatomen, R²³ für Wasserstoff oder Methyl, R²⁴ für lineare oder verzweigte Alkylreste mit 1 bis 4 Kohlenstoffatomen und w für Zahlen von 1 bis 20 steht,
- Aminoxide,
- Hydroxymischether,
- Sorbitanfettsäureester und Anlagerungeprodukte von Ethylenoxid an Sorbitanfettsäureester wie beispielsweise die Polysorbate,
- Zuckerfettsäureester und Anlagerungsprodukte von Ethylenoxid an Zuckerfettsäureester,
- Anlagerungsprodukte von Ethylenoxid an Fettsäurealkanolamide und Fettamine,
- Zuckertenside vom Typ der Alkyl- und Alkenyloligoglykoside gemäß Formel (E4-II),

   R²⁵O-[G]ₚ (E4-II)

   in der R²⁵ für einen Alkyl- oder Alkenylrest mit 4 bis 22 Kohlenstoffatomen, G für einen Zuckerrest mit 5 oder 6 Kohlenstoffatomen und p für Zahlen von 1 bis 10 steht. Sie können nach den einschlägigen Verfahren der präparativen organischen Chemie erhalten werden.
   Die Alkyl- und Alkenyloligoglykoside können sich von Aldosen bzw. Ketosen mit 5 oder 6 Kohlenstoffatomen, vorzugsweise von Glucose, ableiten. Die bevorzugten Alkyl- und/oder Alkenyloligoglykoside sind somit Alkyl- und/oder Alkenyloligoglucoside. Die Indexzahl p in der allgemeinen Formel (E4-II) gibt den Oligomerisierungsgrad (DP), d. h. die Verteilung von Mono- und Oligoglykosiden an und steht für eine Zahl zwischen 1 und 10. Während p im einzelnen Molekül stets ganzzahlig sein muß und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest R²⁵ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden. Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3). Der Alkyl- bzw. Alkenylrest R²⁵ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.
- Zuckertenside vom Typ der Fettsäure-N-alkylpolyhydroxyalkylamide, ein nichtionisches Tensid der Formel (E4-III), 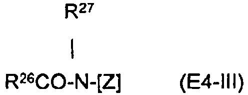 in der R²⁶CO für einen aliphatischen Acylrest mit 6 bis 22 Kohlenstoffatomen, R²⁷ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 12 Kohlenstoffatomen und 3 bis 10 Hydroxylgruppen steht. Bei den Fettsäure-N-alkylpolyhydroxyalkylamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können. Vorzugsweise leiten sich die Fettsäure-N-alkylpolyhydroxyalkylamide von reduzierenden Zuckern mit 5 oder 6 Kohlenstoffatomen, insbesondere von der Glucose ab. Die bevorzugten Fettsäure-N-alkylpolyhydroxyalkylamide stellen daher Fettsäure-N-alkylglucamide dar, wie sie durch die Formel (E4-IV) wiedergegeben werden:

   R²⁸CO-NR²⁹-CH₂-(CHOH)₄CH₂OH (E4-IV)

Vorzugsweise werden als Fettsäure-N-alkylpolyhydroxyalkylamide Glucamide der Formel (E4-IV) eingesetzt, in der R²⁹ für Wasserstoff oder eine Alkylgruppe steht und R²⁸CO für den Acylrest der Capronsäure, Caprylsäure, Caprinsäure, Laurinsäure, Myristinsäure, Palmitinsäure, Palmoleinsäure, Stearinsäure, Isostearinsäure, Ölsäure, Elaidinsäure, Petroselinsäure, Linolsäure, Linolensäure, Arachinsäure, Gadoleinsäure, Behensäure oder Erucasäure bzw. technischer Mischungen dieser Säuren steht. Besonders bevorzugt sind Fettsäure-N-alkylglucamide der Formel (E4-IV), die durch reduktive Aminierung von Glucose mit Methylamin und anschließende Acylierung mit Laurinsäure oder C12/14-Kokosfettsäure bzw. einem entsprechenden Derivat erhalten werden. Weiterhin können sich die Polyhydroxyalkylamide auch von Maltose und Palatinose ableiten.

Als bevorzugte nichtionische Tenside haben sich die Alkylenoxid-Anlagerungsprodukte an gesättigte lineare Fettalkohole und Fettsäuren mit jeweils 2 bis 30 Mol Ethylenoxid pro Mol Fettalkohol bzw. Fettsäure erwiesen. Mittel mit hervorragenden Eigenschaften werden ebenfalls erhalten, wenn sie als nichtionische Tenside Fettsäureester von ethoxyliertem Glycerin enthalten.

Diese Verbindungen sind durch die folgenden Parameter gekennzeichnet. Der Alkylrest enthält 6 bis 22 Kohlenstoffatome und kann sowohl linear als auch verzweigt sein. Bevorzugt sind primäre lineare und in 2-Stellung methylverzweigte aliphatische Reste. Solche Alkylreste sind beispielsweise 1-Octyl, 1-Decyl, 1-Lauryl, 1-Myristyl, 1-Cetyl und 1-Stearyl. Besonders bevorzugt sind 1-Octyl, 1-Decyl, 1-Lauryl, 1-Myristyl. Bei Verwendung sogenannter "Oxo-Alkohole" als Ausgangsstoffe überwiegen Verbindungen mit einer ungeraden Anzahl von Kohlenstoffatomen in der Alkylkette.

Weiterhin können als nichtionische Tenside die Zuckertenside enthalten sein.

Bei den als Tensid eingesetzten Verbindungen mit Alkylgruppen kann es sich jeweils um einheitliche Substanzen handeln. Es ist jedoch in der Regel bevorzugt, bei der Herstellung dieser Stoffe von nativen pflanzlichen oder tierischen Rohstoffen auszugehen, so dass man Substanzgemische mit unterschiedlichen, vom jeweiligen Rohstoff abhängigen Alkylkettenlängen erhält.

Bei den Tensiden, die Anlagerungsprodukte von Ethylen- und/oder Propylenoxid an Fettalkohole oder Derivate dieser Anlagerungsprodukte darstellen, können sowohl Produkte mit einer "normalen" Homologenverteilung als auch solche mit einer eingeengten Homologenverteilung verwendet werden. Unter "normaler" Homologenverteilung werden dabei Mischungen von Homologen verstanden, die man bei der Umsetzung von Fettalkohol und Alkylenoxid unter Verwendung von Alkalimetallen, Alkalimetallhydroxiden oder Alkalimetallalkoholaten als Katalysatoren erhält. Eingeengte Homologenverteilungen werden dagegen erhalten, wenn beispielsweise Hydrotalcite, Erdalkalimetallsalze von Ethercarbonsäuren, Erdalkalimetalloxide, -hydroxide oder -alkoholate als Katalysatoren verwendet werden. Die Verwendung von Produkten mit eingeengter Homologenverteilung kann bevorzugt sein.

Die Tensidmenge in dem erfindungsgemäßen Textil- oder Oberflächenbehandlungsmittel hängt stark vom vorgesehenen Anwendungszweck ab und liegt vorzugsweise in einem Bereich von 0,1 bis 50 Gew.-%, besonders bevorzugt in einem Bereich von 0,5 bis 25 Gew.-% und ganz besonders bevorzugt in einem Bereich von 1 bis 10 Gew.-%, jeweils bezogen auf die Gesamtmenge des n Mittels.

Weiterhin kann das Textil- oder Oberflächenbehandlungsmittel der vorliegenden Erfindung mindestens einen Duftstoff enthalten, der dem Mittel vorzugsweise einen angenehmen und/oder frischen Dufteindruck verleiht. Der mindestens eine Duftstoff ist keinerlei Beschränkungen unterworfen. So können als mindestens ein Duftstoff einzelne Riechstoffverbindungen, sowohl synthetische oder natürliche Verbindungen vom Typ der Ester, Ether, Aldehyde, Ketone, Alkohole, Kohlenwasserstoffe, Säuren, Kohlensäureester, aromatische Kohlenwasserstoffe, aliphatische Kohlenwasserstoffe, gesättigte und / oder ungesättigte Kohlenwasserstoffe und Mischungen daraus verwendet werden.

Als Duftaldehyde oder Duftketone können dabei alle üblichen Duftaldehyde und Duftketone eingesetzt werden, die typischerweise zur Herbeiführung eines angenehmen Duftempfindens eingesetzt werden. Geeignete Duftaldehyde und Duftketone sind dem Fachmann allgemein bekannt.

Die Anteil des mindestens einen Duftstoffs in dem erfindungsgemäßen Textil- oder Oberflächenbehandlungsmittel liegt vorzugsweise zwischen 0,01 und 5 Gew.%, besonders vorzugsweise zwischen 0,1 und 3 Gew.-% sowie ganz besonders bevorzugt zwischen 0,5 und 2 Gew.% bezogen auf die Gesamtmenge des Mittels.

Bevorzugt werden Mischungen verschiedener Duftstoffe (aus den verschiedenen oben genannten Duftstoffklassen) verwendet, die gemeinsam eine ansprechende Duftnote erzeugen. In diesem Fall ist die Gesamtmenge des mindestens einen Duftstoffs die Menge aller Duftstoffe in der Mischung zusammen bezogen auf die Gesamtmenge des Mittels.

In einer bevorzugten Ausgestaltung der vorliegenden Erfindung handelt es sich bei dem Textil- oder Oberflächenbehandlungsmittel um ein Textilbehandlungsmittel, das beispielsweise zur Textilvorbehandlung als auch zur Textilnachbehandlung und zur Textilwäsche eingesetzt werden kann. Das Textilbehandlungsmittel kann sowohl im privaten Bereich als auch in der Textilindustrie eingesetzt werden, wobei die erfindungsgemäßen kationischen Benzoxazin(co)polymere sowohl zur permanenten als auch zur temporären Textilbehandlung verwendet werden können.

In einer überaus bevorzugten Ausführungsform der Erfindung ist das genannte Textilbehandlungsmittel ein Waschmittel, Weichspüler, weichmachendes Waschmittel oder Waschhilfsmittel, wobei die genannten Mittel neben den bereits genannten Inhaltsstoffen weitere Inhaltsstoffe, wie beispielsweise Buildersubstanzen, Bleichmittel, Bleichaktivatoren, Enzyme, Elektrolyte, nichtwässrigen Lösungsmittel, pH-Stellmittel, Parfümträger, Fluoreszenzmittel, Farbstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Konservierungsmittel, Korrosionsinhibitoren, Antistatika, Bittermittel, Bügelhilfsmittel, Phobier- und Imprägniermittel, Quell- und Schiebefestmittel, neutrale Füllsalze sowie UV-Absorber enthalten können.

Ein weiterer Gegenstand der vorliegenden Erfindung ist ein kosmetisches Mittel, das in einem kosmetischen Träger mindestens ein erfindungsgemäßes kationisches Benzoxazin(co)polymer umfasst sowie die Verwendung der genannten Polymere zur Haarkonditionierung und/oder zur Haarumformung.

In der Ausführungsform als kosmetischen Mittel, sind die die erfindungsgemäßen kationischen Benzoxazin(co)polymere in einen kosmetischen Träger eingearbeitet.

Bevorzugte kosmetische Träger sind wässrige, alkoholische oder wässrigalkoholische Medien mit vorzugsweise mindestens 10 Gew.-% Wasser, bezogen auf das gesamte Mittel. Als Alkohole können insbesondere die für kosmetische Zwecke üblicherweise verwendeten niederen Alkohole mit 1 bis 4 Kohlenstoffatomen wie zum Beispiel Ethanol und Isopropanol enthalten sein.

Als zusätzliche Co-Solventien können organische Lösungsmittel oder ein Gemisch aus Lösungsmitteln mit einem Siedepunkt unter 400°C in einer Menge von 0,1 bis 15 Gewichtsprozent, bevorzugt von 1 bis 10 Gewichtsprozent bezogen auf das gesamte Mittel enthalten sein. Besonders geeignet als zusätzliche Co-Solventien sind unverzweigte oder verzweigte Kohlenwasserstoffe wie Pentan, Hexan, Isopentan und cyclische Kohlenwasserstoffe wie Cyclopentan und Cyclohexan. Weitere, besonders bevorzugte wasserlösliche Lösungsmittel sind Glycerin, Ethylenglykol und Propylenglykol in einer Menge bis 30 Gew.-% bezogen auf das gesamte Mittel.

Insbesondere der Zusatz von Glycerin und/oder Propylenglykol und/oder Polyethylenglykol und/oder Polypropylenglykol erhöht die Flexibilität des bei Anwendung des erfindungsgemäßen Mittels gebildeten Polymerfilms. Wird also ein flexibler Frisurenhalt gewünscht, enthalten die erfindungsgemäßen Mittel vorzugsweise 0,01 bis 30 Gew.-% Glycerin und/oder Propylenglykol und/oder Polyethylenglykol und/oder Polypropylenglykol bezogen auf das gesamte Mittel.

Die kosmetischen Mittel weisen bevorzugt einen pH-Wert von 2 bis 11 auf. Besonders bevorzugt ist der pH-Bereich zwischen 2 und 8. Die Angaben zum pH-Wert beziehen sich dabei im Sinne dieser Schrift auf den pH-Wert bei 25°C, sofern nichts anderes vermerkt ist.

Die Formulierung der kosmetischen Mittel kann in den üblichen Formen erfolgen, beispielsweise in Form von Lösungen, die als Haarwasser oder Pump- oder Aerosolspray auf das Haar aufgebracht werden können, in Form von Cremes, Emulsionen, Wachsen, Gelen oder auch tensidhaltigen schäumenden Lösungen oder anderen Zubereitungen, die für die Anwendung auf dem Haar geeignet sind.

Das erfindungsgemäße kosmetische Mittel enthält - - insbesondere wenn es zur Haarumformung eingesetzt wird - in einer bevorzugten Ausführungsform zusätzlich mindestens ein filmbildendes und/oder festigendes Polymer. Letzteres ist von den besagten erfindungsgemäßen kationischen Benzoxazin(co)polymeren verschieden.

Zu den bevorzugten Eigenschaften der filmbildenden Polymeren zählt die Filmbildung. Unter filmbildenden Polymeren sind solche Polymere zu verstehen, welche beim Trocknen einen kontinuierlichen Film auf der Haut, dem Haar oder den Nägeln hinterlassen. Derartige Filmbildner können in den unterschiedlichsten kosmetischen Produkten wie beispielsweise Gesichtsmasken, Make-up, Haarfestigern, Haarsprays, Haargelen, Haarwachsen, Haarkuren, Shampoos oder Nagellacken verwendet werden. Bevorzugt sind insbesondere solche Polymere, die eine ausreichende Löslichkeit in Wasser oder Wasser/Alkohol-Gemischen besitzen, um in dem erfindungsgemäßen Mittel in vollständig gelöster Form vorzuliegen. Die filmbildenden Polymere können synthetischen oder natürlichen Ursprungs sein.

Unter filmbildenden Polymeren werden weiterhin erfindungsgemäß solche Polymere verstanden, die bei Anwendung in 0,01 bis 20 Gew.-%-iger wässriger, alkoholischer oder wässrigalkoholischer Lösung in der Lage sind, auf dem Haar einen transparenten Polymerfilm abzuscheiden.

Festigende Polymere tragen zum Halt und/oder zum Aufbau des Haarvolumens und der Haarfülle der Gesamtfrisur bei. Diese Polymere sind gleichzeitig auch filmbildende Polymere und daher generell typische Substanzen für formgebende Haarbehandlungsmittel wie Haarfestiger, Haarschäume, Haarwachse, Haarsprays. Die Filmbildung kann dabei durchaus punktuell sein und nur einige Fasern miteinander verbinden.

Als eine Testmethode für die festigende Wirkung eines Polymers wird häufig der so genannte curlretention - Test angewendet.

Da Polymere häufig multifunktional sind, das heißt mehrere anwendungstechnisch erwünschte Wirkungen zeigen, finden sich zahlreiche Polymere in mehreren auf die Wirkungsweise eingeteilten Gruppen, so auch im CTFA Handbuch.

Das erfindungsgemäße kosmetische Mittel enthält bevorzugt mindestens ein filmbildendes und/oder festigendes Polymer, das aus mindestens einem Polymer der Gruppe ausgewählt wird, die gebildet wird aus nichtionischen Polymeren, kationischen Polymeren, amphoteren Polymeren, zwitterionischen Polymeren und anionischen Polymeren, bevorzugt aus nichtionischen, kationischen und amphoteren Polymeren.

Die zusätzlichen filmbildenden und/oder festigenden Polymere sind in dem erfindungsgemäßen kosmetischen Mittel bevorzugt in einer Menge von 0,01 Gew.-% bis 10 Gew.-%, insbesondere von 0,5 Gew.-% bis 8,0 Gew.-%, ganz besonders bevorzugt von 0,5 Gew.-% bis 5,0 Gew.-%, jeweils bezogen auf das Gewicht des Mittels, enthalten. Diese Mengenangaben gelten auch für alle in den erfindungsgemäßen Mitteln einsetzbaren nachfolgenden bevorzugten Typen der filmbildenden und/oder festigenden Polymere.

Bevorzugte, nichtionische filmbildende und/oder nichtionische haarfestigende Polymere sind Homo-oder Copolymere, die aus mindestens einem der folgenden Monomere aufgebaut sind: Vinylpyrrolidon, Vinylcaprolactam, Vinylester wie z.B. Vinylacetat, Vinylalkohol, Acrylamid, Methacrylamid, Alkyl- und Dialkylacrylamid, Alkyl- und Dialkylmethacrylamid, Alkylacrylat, Alkylmethacrylat, wobei jeweils die Alkylgruppen dieser Monomere aus (C₁ bis C₃)-Alkylgruppen ausgewählt werden.

Geeignet sind insbesondere Homopolymere des Vinylcaprolactams oder des Vinylpyrrolidons (wie beispielsweise Luviskol^{®} K 90 oder Luviskol^{®} K 85 der Firma BASF SE), Copolymerisate aus Vinylpyrrolidon und Vinylacetat (wie sie beispielsweise unter dem Warenzeichen Luviskol^{®} VA 37, Luviskol^{®} VA 55, Luviskol^{®} VA 64 und Luviskol^{®} VA 73 von der Firme BASF SE vertrieben werden), Terpolymere aus Vinylpyrrolidon, Vinylacetat und Vinylpropionat, Polyacrylamide (wie beispielsweise Akypomine^{®} P 191 von der Firma CHEM-Y), Polyvinylalkohole (die beispielsweise unter den Handelsbezeichnungen Elvanol^{®} von Du Pont oder Vinol^{®} 523/540 von der Firma Air Products vertrieben werden), Terpolymere aus Vinylpyrrolidon, Methacrylamid und Vinylimidazol (wie beispielsweise Luviset^{®} Clear der Firma BASF SE).

Neben den auf ethylenisch ungesättigten Monomeren basierenden nichtionischen Polymeren eignen sich weiterhin zur bevorzugten Ausführung der technischen Lehre nichtionische Cellulosederivate als filmbildende und/oder festigende Polymere, die bevorzugt ausgewählt werden aus Methylcellulose und insbesondere aus Celluloseether, wie Hydroxypropylcellulose (z. B. Hydroxypropylcellulose mit einem Molekulargewicht von 30.000 bis 50.000 g/mol, welche beispielsweise unter der Handelsbezeichnung Nisso SI^{®} von der Firma Lehmann & Voss, Hamburg, vertrieben wird), Hydroxyethylcellulose, wie sie beispielsweise unter den Warenzeichen Culminal^{®} und Benecel^{®} (AQUALON) und Natrosol^{®}-Typen (Hercules) vertrieben werden,

Unter kationischen Polymeren sind Polymere zu verstehen, welche in der Haupt- und/oder Seitenkette eine Gruppe aufweisen, welche "temporär" oder "permanent" kationisch sein kann. Als "permanent kationisch" werden erfindungsgemäß solche Polymere bezeichnet, die unabhängig vom pH-Wert des Mittels eine kationische Gruppe aufweisen. Dies sind in der Regel Polymere, die ein quartäres Stickstoffatom, beispielsweise in Form einer Ammoniumgruppe, enthalten. Bevorzugte kationische Gruppen sind quartäre Ammoniumgruppen. Insbesondere solche Polymere, bei denen die quartäre Ammoniumgruppe über eine C1-4-Kohlenwasserstoffgruppe an eine aus Acrylsäure, Methacrylsäure oder deren Derivaten aufgebaute Polymerhauptkette gebunden sind, haben sich als besonders geeignet erwiesen.

Die erfindungsgemäßen kosmetischen Mittel können ferner zusätzlich mindestens ein Tensid enthalten.

Ferner können die erfindungsgemäßen kosmetischen Mittel zusätzlich mindestens einen Pflegestoff enthalten ausgewählt aus einer Verbindung aus der Gruppe, die gebildet wird aus Silikonöl, Silikongum, Proteinhydrolysat, Vitamin.

Erfindungsgemäß geeignete Silikonöle oder Silikongums sind insbesondere Dialkyl- und Alkylarylsiloxane, wie beispielsweise Dimethylpolysiloxan und Methylphenylpolysiloxan, sowie deren alkoxylierte, quaternierte oder auch anionische Derivate. Bevorzugt sind cyclische und lineare Polydialkylsiloxane, deren alkoxylierte und/oder aminierte Derivate, Dihydroxypolydimethylsiloxane und Polyphenylalkylsiloxane.

Erfindungsgemäß können Proteinhydrolysate sowohl pflanzlichen als auch tierischen oder marinen oder synthetischen Ursprungs eingesetzt werden.

Wenngleich der Einsatz der Proteinhydrolysate als solche bevorzugt ist, können an deren Stelle gegebenenfalls auch anderweitig erhaltene Aminosäuregemische eingesetzt werden. Ebenfalls möglich ist der Einsatz von Derivaten der Proteinhydrolysate, beispielsweise in Form ihrer Fettsäure-Kondensationsprodukte. Solche Produkte werden beispielsweise unter den Bezeichnungen Lamepon^{®} (Cognis), Lexein^{®} (Inolex), Crolastin^{®} (Croda), Crosilk^{®} (Croda) oder Crotein^{®} (Croda) vertrieben.

Erfindungsgemäß ist es auch möglich, eine Mischung aus mehreren Proteinhydrolysaten einzusetzen.

Die Proteinhydrolysate sind in den erfindungsgemäßen kosmetischen Mitteln beispielsweise in Konzentrationen von 0,01 Gew.-% bis zu 20 Gew.-%, vorzugsweise von 0,05 Gew.-% bis zu 15 Gew.-% und ganz besonders bevorzugt in Mengen von 0,05 Gew.-% bis zu 5,0 Gew.-%, jeweils bezogen auf die gesamte Anwendungszubereitung enthalten.

Als Pflegestoff kann das erfindungsgemäße kosmetische Mittel weiterhin mindestens ein Vitamin, ein Provitamin, eine Vitaminvorstufe und/oder eines derer Derivate enthalten.

Dabei sind erfindungsgemäß solche Vitamine, Provitamine und Vitaminvorstufen bevorzugt, die üblicherweise den Gruppen A, B, C, E, F und H zugeordnet werden.

Die Formulierung der erfindungsgemäßen kosmetischen Mittel kann in allen für kosmetische Mittel üblichen Formen erfolgen, beispielsweise in Form von Lösungen, die Haarwasser oder Pump- oder Aerosolspray auf das Haar aufgebracht werden können, in Form von Cremes, Emulsionen, Wachsen, Gelen oder auch tensidhaltigen schäumenden Lösungen oder anderen Zubereitungen, die für die Anwendung auf dem Haar geeignet sind.

Vorzugsweise handelt es sich jedoch im Rahmen der Ausführungsform als kosmetisches Mittel um Mittel zur temporären Verformung keratinischer Fasern, d.h. um Stylingmittel. Bevorzugte Stylingmittel sind Stylinggele, Pumphaarsprays, Aerosolhaarspray, Pumphaarschäume und Aerosolhaarschäume.

Stylinggele ist dabei im Rahmen der vorliegenden Anmeldung der Oberbegriff für klare oder trübe Produkte, Stylingwachse, Stylingcremes, Stylinglotionen, Styling-Jellys usw. Letztlich fallen unter diesen Begriff alle Mittel zum Frisieren von Haaren, die nicht Haarsprays oder Schäume sind.

Unter Haarschäumen werden dabei Zusammensetzungen verstanden, die bei der Entnahme aus einem geeigneten Behälter einen Schaum ausbilden. Es kann notwendig sein, den Mitteln Inhaltsstoffe zuzusetzen, die die Schaumbildung fördern oder einmal gebildeten Schaum stabilisieren. Insbesondere eignen sich dafür Tenside und/oder Emulgatoren, wie sie bereits oben beschrieben wurden. Vorzugsweise werden Tenside aus der Gruppe der kationischen Tenside eingesetzt.

Haarcremes und Haargele enthalten in der Regel Strukturanten und/oder verdickende Polymere, die dazu dienen, den Produkten die gewünschte Konsistenz zu verleihen. Strukturanten und/oder verdickende Polymere werden typischerweise in einer Menge von 0,1 bis 10 Gew.-%, bezogen auf das gesamte Produkt, eingesetzt. Mengen von 0,5 bis 5 Gew.-%, insbesondere 0,5 bis 3 Gew.-% sind bevorzugt. Da die erfindungsgemäß eingesetzte Polymerkombination jedoch selbstverdickende Eigenschaften aufweist, ist die Zugabe weiterer Strukturanten und/oder verdickender Polymere nicht zwingend erforderlich. Vorzugsweise enthalten die erfindungsgemäßen Mittel keine weiteren Strukturanten und/oder verdickender Polymere.

Sofern es sich bei den erfindungsgemäßen Mitteln um ein Aerosolprodukt handelt, enthält dieses zwingend ein Treibmittel.

Erfindungsgemäß geeignete Treibmittel sind beispielsweise N₂O, Dimethylether, CO₂, Luft und Alkane mit 3 bis 5 Kohlenstoffatomen, wie Propan, n-Butan, iso-Butan, n-Pentan und iso-Pentan, und deren Mischungen. Bevorzugt sind Dimethylether, Propan, n-Butan, iso-Butan und deren Mischungen.

Bevorzugt werden die genannten Alkane, Mischungen der genannten Alkane oder Mischungen der genannten Alkane mit Dimethylether als einziges Treibmittel eingesetzt. Die Erfindung umfasst aber ausdrücklich auch die Mitverwendung von Treibmitteln vom Typ der Fluorchlorkohlenwasserstoffe, insbesondere aber der Fluorkohlenwasserstoffe.

Über das Mengenverhältnis von Treibmittel zu den übrigen Bestandteilen der Zubereitungen lassen sich bei gegebener Sprühvorrichtung die Größen der Aerosoltröpfchen bzw. der Schaumblasen und die jeweilige Größenverteilung einstellen.

Die Menge an eingesetztem Treibmittel variiert in Abhängigkeit von der konkreten Zusammensetzung des Mittels, der verwendeten Verpackung und der gewünschten Produktart, etwa Haarspray oder Haarschaum. Bei Verwendung herkömmlicher Sprühvorrichtungen enthalten Aerosolschaumprodukte das Treibmittel bevorzugt in Mengen von 1 bis 35 Gew.-%, bezogen auf das gesamte Produkt. Mengen von 2 bis 30 Gew.-%, insbesondere von 3 bis 15 Gew.-% sind besonders bevorzugt. Aerosolsprays enthalten generell größere Mengen an Treibmittel. Bevorzugt wird das Treibmittel in diesem Fall in einer Menge von 30 bis 98 Gew.-%, bezogen auf das gesamte Produkt, eingesetzt. Mengen von 40 bis 95 Gew.%, insbesondere von 50 bis 95 Gew.-% sind besonders bevorzugt.

Die Aerosolprodukte lassen sich in üblicher Art und Weise herstellen. In der Regel werden alle Bestandteile des jeweiligen Mittels mit Ausnahme des Treibmittels in einen geeigneten druckfesten Behälter eingefüllt. Dieser wird daraufhin mit einem Ventil verschlossen. Über herkömmliche Techniken wird schließlich die gewünschte Menge Treibmittel eingefüllt.

Ein erfindungsgemäßes Verfahren, bei dem das erfindungsgemäße Mittel im Rahmen einer Haarumformung verwendet wird zeichnet sich durch folgende Parameter aus: Das erfindungsgemäße kosmetische Mittel wird auf das Haar als Pumphaarspray, Aerosolhaarspray, Pumphaarschaum, Aerosolhaarschaum oder Stylinggel aufgetragen und gegebenenfalls mit den Handflächen und/oder den Fingern in das Haar eingearbeitet.

Die gewünschte Verformung der Haare kann dabei mit den Finger oder Händen sowie mit geeigneten, herkömmlichen Hilfsmitteln wie beispielsweise Kamm oder Bürste erfolgen. Zur Unterstützung der Formgebung kann nach der Austragung das Haar mit einer Wärmequelle, wie z.B. mit einem Föhn oder einem Glätteisen, behandelt werden.

Für das erfindungsgemäße Verfahren gilt mutatis mutandis das zu den erfindungsgemäßen Mitteln Gesagte.

Das erfindungsgemäße Mittel wird bevorzugt nach der Anwendung nicht aus dem Haar gespült.

Ebenfalls Gegenstand der vorliegenden Erfindung ist ein Verfahren zur Behandlung mindestens einer Oberfläche, umfassend die Schritte:
a) Bereitstellung mindestens eines erfindungsgemäßen kationischen Benzoxazin(co)polymers in einer applizierbaren Dareichungsform,
b) Behandlung mindestens einer Oberfläche mit dem in Schritt a) bereitgestellten kationischen Benzoxazin(co)polymer.

Im Sinne der vorliegenden Erfindung ist unter einer "applizierbaren Dareichungsform" des erfindungsgemäßen kationischen Benzoxazin(co)polymers jede Form einer Lösungen, Dispersionen oder Emulsionen zu verstehen, die dass erfindungsgemäße kationische Benzoxazin(co)polymer umfasst. Insbesondere sind wässrige Lösungen, Dispersionen oder Emulsionen bevorzugt die, bezogen auf die Gesamtmenge des Mittels, einen Wasseranteil von mindestens 5 Gew.%, vorzugsweise von mindestens 50 Gew.-% und besonders bevorzugt von mindestens 90 Gew.-% aufweisen. Ebenfalls sind Alkoholbasierte Lösungen, Dispersionen und Emulsionen bevorzugt die, bezogen auf die Gesamtmenge des Mittels, einen Alkoholanteil von mindestens 5 Gew.-%, vorzugsweise von mindestens 50 Gew.-% und besonders bevorzugt von mindestens 90 Gew.-% aufweisen. Bevorzugte Alkohole werden insbesondere ausgewählt aus Ethanol, Isopropanol oder aus deren beliebigen Mischungen. Weiterhin können die genannten Lösungen, Dispersionen oder Emulsionen auch beliebige Mischungen aus Wasser und wassermischbaren Alkoholen, wie etwa Wasser/Ethanol- und Wasser/Propanol-Mischungen enthalten. Durch die Behandlung mit dem erfindungsgemäßen kationischen Benzoxazin(co)polymer oder mit einem Mittel, das das erfindungsgemäße kationische Benzoxazin(co)polymer umfasst, können unterschiedliche Oberfläche mit unterschiedlichen Eigenschaften ausgestattet werden.

Bevorzugte Oberflächen werden dabei ausgewählt aus Kohlefasern, harten Oberflächen, textilen Oberflächen und keratinischen Fasern.

Kohlefasern werden u.a. zur Herstellung von faserverstärkten Verbundwerkstoffen verwendet. Faserverstärkte Verbundwerkstoffe bestehen als Mischwerkstoffe in der Regel aus mindestens zwei Komponenten. Neben einer Harzkomponente umfassen die faserverstärkten Verbundwerkstoffe eine Kohlefaserkomponente, die beispielsweise aus unidirektionalen als auch aus Web- oder Kurzfasern bestehen kann. Die verwendete Kohlefaserkomponente verleiht dem Werkstoff in Kombination mit der eingesetzten Harzkomponente eine hohe Festigkeit, weshalb faserverstärkte Verbundwerkstoffe als Kompositmaterialien in Anwendungsbereichen mit hohen Anforderungen an die strukturellen Materialeigenschaften eingesetzt werden, wie etwa im Luftfahrzeug- oder Automobilbau.

Um ein stabiles faserverstärktes Verbundmaterial mit hoher Qualität in großtechnischem Maßstab zu formen, ist es notwendig, dass in einem Imprägnierverfahren viele Kohlenfaserbündel, die aus mehreren Tausend Filamenten zusammengesetzt sind, leicht und vollständig mit dem jeweiligen Matrixharz benetzt werden können. Da jedoch Kohlenfasern eine geringe Duktilität haben und spröde sind, werden sie als Ergebnis der mechanischen Reibung leicht fransig und besitzen oft eine schlechte Benetzbarkeit in Bezug auf die verwendeten Matrixharze. Um diese zu verbessern, werden Kohlefasern, die als Verstärkungsmaterialien von faserverstärkten Verbundmaterialien verwendet werden, gewöhnlich mit einem Schlichtemittel vorbehandelt.

Kohlefasern, die mit dem mit dem erfindungsgemäßen kationischen Benzoxazin(co)polymer, etwa in Form einer wässrigen Lösung, Emulsion oder Dispersion, behandelt werden, zeichnen sich durch eine verbesserte Handhabbarkeit im Herstellungsverfahren von faserverstärkten Verbundwerkstoffen aus. Darüber hinaus zeigen die behandelten Kohlefasern eine verbesserte Benetzbarkeit mit dem jeweiligen Matrixharz. Insbesondere wird die Benetzbarkeit der Kohlefasern im Bezug auf Benzoxazin-basierte Harzsysteme verbessert.

Ein weiterer Gegenstand der vorliegenden Erfindung ist daher die Verwendung der erfindungsgemäßen kationischen Benzoxazin(co)polymere als Schlichtemittel, insbesondere als Schlichtemittel für Kohlefasern. Die erfindungsgemäßen kationischen Benzoxazin(co)polymere können ebenfalls als Schlichtemittel für textile Fasern oder textile Flächengebilde verwendet werden.

Harte Oberflächen, die mit dem erfindungsgemäßen kationischen Benzoxazin(co)polymer behandelt werden, können im Rahmen der vorliegenden Erfindung besonders bevorzugt aus Porzellan, Glas, Keramik, Kunststoff und/oder Metall ausgewählt werden.

Auf den so behandelten Oberflächen kann eine verbesserte Haftung von verschiedenen Materialien, wie beispielsweise von Lacken oder Klebstoffen, beobachtet werden.

Ein weiterer Gegenstand der vorliegenden Erfindung ist daher die Verwendung der erfindungsgemäßen kationischen Benzoxazin(co)polymere als Haftvermittler, insbesondere als Haftvermittler für Lacke und Klebstoffe.

Textile Oberflächen oder harte Oberflächen, die mit dem erfindungsgemäßen kationischen Benzoxazin(co)polymer behandelt werden, können im Rahmen der vorliegenden Erfindung aus textilen Flächengebilden oder aus den oben genannten harten Oberflächen ausgewählt werden.

Besonders bevorzugte textile Oberflächen sind textile Flächengebilde aus Wolle, Seide, Jute, Hanf, Baumwolle, Lein, Sisal, Ramie; Rayon, Celluloseester, Polyvinylderivate, Polyolefinen, Polyamiden, Viskose oder Polyester oder deren Mischungen ausgewählt werden, während harte. Ganz besonders bevorzugt sind im Rahmen der vorliegenden Erfindung textile Oberflächen aus Baumwolle oder Baumwollmischgeweben.

Die so behandelten textilen oder harten Oberflächen zeichnen sich durch eine verringerte Wiederanschmutzbarkeit und durch eine verbesserte Schmutzablösbarkeit aus. Ein weiterer Gegenstand der vorliegenden Erfindung ist daher die Verwendung der erfindungsgemäßen kationischen Benzoxazin(co)polymere zur Verbesserung der Schmutzablösung von und/oder zur Reduzierung der Wiederanschmutzbarkeit auf textilen oder harten Oberflächen.

Aufgrund seiner besonderen chemischen Struktur weisen die vorgenannten Oberflächen nach der Behandlung mit dem erfindungsgemäßen kationischen Benzoxazin(co)polymer gegenüber unbehandelten Oberflächen eine geringere Kontaminierung mit schädlichen Mikroorganismen auf. Ein weiterer Gegenstand der vorliegenden Erfindung ist daher die Verwendung der erfindungsgemäßen kationischen Benzoxazin(co)polymere zur Beschichtung von Oberflächen, insbesondere zur antibakteriellen Beschichtung von Oberflächen.

### Ausführungsbeispiele

1. Herstellung polymerisierbarer Benzoxazin-Verbindungen unter Verwendung von Jeffaminen Im Folgenden wird die Herstellung verschiedener polymerisierbarer Benzoxazin-Verbindungen der Formel (B-Box-I) beschieben 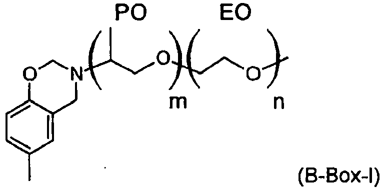
1.1. Herstellung einer polymerisierbaren Benzoxazin-Verbindung unter Verwendung von Jeffamin M2070 (PO/EO 10/31); Bezeichnung (B-Box-I-1.1)

| | | |
|---|---|---|
| Ansatz: | 9,38 g Paraformaldehyd (96%ig) | 0,30 mol |
| | in 50 ml Essigsäureethylester | |
| | 309,9 g Jeffamin M2070 (Fa. Huntsman) | 0,15 mol |
| | in 200 ml Essigsäureethylester | |
| | 16,22 g p-Kresol | 0,15 mol |
| | in 50 ml Essigsäureethylester | |

Paraformaldehyd wurde in Ethylacetat vorgelegt und das ebenfalls in Ethylacetat gelöste p-Kresol innerhalb von 10 Minuten zugetropft. Anschließend wurde innerhalb von 30 Minuten Jeffamin M-2070 zugegeben, wobei die Temperatur unterhalb von 10 °C gehalten wurde. Nach 10-minütigem Nachrühren wurde die Reaktionsmischung für 6 h unter Rückfluss erhitzt. Nach dem Abkühlen wurde die Reaktionsmischung filtriert und das Lösungsmittel sowie entstandenes Wasser im Vakuum entfernt. Man erhielt 318,90 g der entsprechenden polymerisierbaren Benzoxazin-Verbindung B-Box-I-1.1.
1.2 Herstellung einer polymerisierbaren Benzoxazin-Verbindung unter Verwendung von Jeffamin M1000 (PO/EO 3/19), Bezeichnung (B-Box-I-1.2)

| | | |
|---|---|---|
| Ansatz: | 18,7 g Paraformaldehyd (96%ig) | 0,60 mol |
| | in 50 ml Essigsäureethylester | |
| | 312,9 g Jeffamin M1000 (Fa. Huntsman) | 0,30 mol |
| | in 250 ml Essigsäureethylester | |
| | 32,44 g p-Kresol | 0,30 mol |
| | in 60 ml Essigsäureethylester | |

Paraformaldehyd wurde in Ethylacetat vorgelegt und das ebenfalls in Ethylacetat gelöste p-Kresol innerhalb von 10 Minuten zugetropft. Anschließend wurde innerhalb von 30 Minuten Jeffamin M-100 zugegeben, wobei die Temperatur unterhalb von 10 °C gehalten wurde. Nach 10-minütigem Nachrühren wurde die Reaktionsmischung für 6 h unter Rückfluss erhitzt. Nach dem Abkühlen wurde die Reaktionsmischung filtriert und das Lösungsmittel sowie entstandenes Wasser im Vakuum entfernt. Man erhielt 352,57 g der entsprechenden polymerisierbaren Benzoxazin-Verbindung B-Box-I-1.2.
1.2 Herstellung einer polymerisierbaren Benzoxazin-Verbindungen unter Verwendung von N-(3-Aminopropyl)imidazol
Im Folgenden wird die Herstellung einer polymerisierbaren Benzoxazin-Verbindung der Formel (B-Box-II) beschieben:

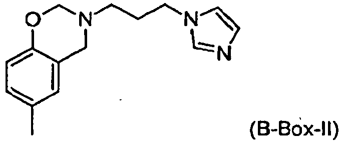

| | | |
|---|---|---|
| Ansatz: | 78,20 g Paraformaldehyd (96%ig) | 2,50 mol |
| | in 100 ml Essigsäureethylester | |
| | 157,5g N-(3-Aminopropyl)-imidazol (Lupragen API, BASF SE) | 1,25 mol |
| | in 10 ml Essigsäureethylester | |
| | 135,17 g p-Kresol | 1,25 mol |
| | in 100 ml Essigsäureethylester | |

Paraformaldehyd wurde in Ethylacetat vorgelegt und das ebenfalls in Ethylacetat gelöste p-Kresol innerhalb von 10 Minuten zugetropft. Anschließend wurde innerhalb von 30 Minuten Lupragen-API® zugegeben, wobei die Temperatur unterhalb von 10 °C gehalten wurde. Nach 10-minütigem Nachrühren wurde die Reaktionsmischung für 6 h unter Rückfluss erhitzt. Nach dem Abkühlen wurde die Reaktionsmischung filtriert und das Lösungsmittel sowie entstandenes Wasser im Vakuum entfernt. Man erhielt 322,74 g der entsprechenden polymerisierbaren Benzoxazin-Verbindung B-Box-II.
1.3 Herstellung einer polymerisierbaren Benzoxazin-Verbindungen unter Verwendung von Ethanolamin Im Folgenden wird die Herstellung einer polymerisierbaren Benzoxazin-Verbindung der Formel (B-Box-III) beschieben:

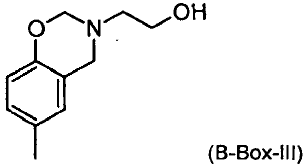

| | | |
|---|---|---|
| Ansatz: | 106,35 g Paraformaldehyd (96%ig) | 3,40 mol |
| | in 100 ml Essigsäureethylester | |
| | 103,87 g Ethanolamin | 1,70 mol |
| | in 30 ml Essigsäureethylester | |
| | 183,84 g p-Kresol | 1,70 mol |
| | in 80 ml Essigsäureethylester | |

Paraformaldehyd wurde in Ethylacetat vorgelegt und das ebenfalls in Ethylacetat gelöste p-Kresol innerhalb von 10 Minuten zugetropft. Anschließend wurde innerhalb von 30 Minuten Ethanolamin zugegeben, wobei die Temperatur unterhalb von 10 °C gehalten wurde. Nach 10-minütigem Nachrühren wurde die Reaktionsmischung für 6 h unter Rückfluss erhitzt. Nach dem Abkühlen wurde die Reaktionsmischung filtriert und das Lösungsmittel sowie entstandenes Wasser im Vakuum entfernt. Man erhielt 328,6 g der entsprechenden polymerisierbaren Benzoxazin-Verbindung B-Box-III.
2. Polymerisation zur Herstellung von nicht-kationischen Benzoxazin(co)polymeren Die oben beschriebenen polymerisierbaren Benzoxazin-Verbindungen wurden als Mischungen oder alleine in einem Trockenschrank mit Luftzirkulation in Formkörpern bei 180°C innerhalb von 2 h thermisch ausgehärtet. Anschließend wurden die Proben aus den Formkörpern entnommen und auf Raumtemperatur abgekühlt. Dadurch wurden nicht-kationische Benzoxazin(co)polymere in der in Tabelle 1 gezeigten Zusammensetzung hergestellt.

**Tabelle 1: Anteil der jeweiligen polymerisierbaren Benzoxazin-Verbindungen am nicht-kationischen Benzoxazin(co)polymer**

| Polymer | Gewichtsanteil der jeweiligen polymerisierbaren Benzoxazin-Verbindungen in % | | | |
|---|---|---|---|---|
| | B-Box-I-1.2 | B-Box-I-1.1 | B-Box-II | B-Box-III |
| 1 | 100 | | | |
| 2 | | 100 | | |
| 3 | | | 100 | |
| 4 | | | | 100 |
| 5 | | 30 | | 70 |
| 6 | | 50 | | 50 |
| 7 | 30 | | | 70 |
| 8 | 50 | | | 50 |
| 9 | | 30 | 70 | |
| 10 | | 50 | 50 | |
| 11 | 70 | | 30 | |
| 12 | 50 | | 50 | |
| 13 | | 30 | 35 | 35 |
| 14 | | 50 | 25 | 25 |
| 15 | 30 | | 35 | 35 |
| 16 | 50 | | 25 | 25 |

3. Alkylierung nicht-kationischer Benzoxazin(co)polymere zur Herstellung kationischer Benzoxazin(co)polymere
3.1 Alkylierung des nicht-kationischen Benzoxazin(co)polymers 3 mit Dimethylsulfat zur Herstellung des kationischen Benzoxazin(co)polymers alk-3
   28,0 g des nicht-kationischen Benzoxazin(co)polymers 3 (100 Gew.-% B-Box-II) in 60 mL Ethanol wurden unter Rühren langsam mit 26,3 g Dimethylsulfat versetzt. Nach 10-minütigem Nachrühren wurde die Reaktionsmischung für 3,5 h unter Rückfluss erhitzt. Anschließend wurde die Reaktionsmischung 4 Tage bei 22 °C unter einer Stickstoffatmosphäre gerührt und anschließend auf 600 mL Diethylether gegossen. Der Niederschlag wurde abgetrennt und 24 h bei 80 °C in einem Vakuumtrockenschrank getrocknet.
   Man erhielt 48,7g des kationischen Benzoxazin(co)polymers alk-3. Durch NMR-spektroskopische Methoden wurde gezeigt, dass mindestens 5% aller Stickstoffatome, bezogen auf die Gesamtanzahl aller Stickstoffatome im o.g. kationischen Benzoxazin(co)polymer, in Form permanent quartarer Stickstoffatome vorliegen.
3.2 Alkylierung des nicht-kationischen Benzoxazin(co)polymers 8 mit Methyliodid zur Herstellung des kationischen Benzoxazin(co)polymers alk-8
   5,0 g des nicht-kationischen Benzoxazin(co)polymers 8 (50 Gew.-% B-Box-1.2 und 50 Gew.-% B-Box-III) in 6 mL Ethanol wurden unter Rühren langsam mit einer Lösung von 6,86 g Methyliodid in 4 mL Ethanol versetzt. Anschließend wurde die Reaktionsmischung 24 h bei 22 °C unter einer Stickstoffatmosphäre gerührt und anschließend auf 60 mL Diethylether gegossen. Der Niederschlag wurde abgetrennt und 24 h bei 120 °C in einem Vakuumtrockenschrank getrocknet.
   Man erhielt 5,2g des kationischen Benzoxazin(co)polymers alk-8. Durch NMR-spektroskopische Methoden wurde gezeigt, dass mindestens 5% aller Stickstoffatome, bezogen auf die Gesamtanzahl aller Stickstoffatome im o.g. kationischen Benzoxazin(co)polymer, in Form permanent quartärer Stickstoffatome vorliegen.
3.3 Alkylierung des nicht-kationischen Benzoxazin(co)polymers 11 mit Dimethylsulfat zur Herstellung des kationischen Benzoxazin(co)polymers alk-11
   10,6 g des nicht-kationischen Benzoxazin(co)polymers 11 (70 Gew.-% B-Box-1.2 und 30 Gew.-% B-Box-II) in 10 ml Ethanol wurden unter Rühren langsam mit 1,9 g versetzt. Nach 10-minütigem Nachrühren wurde die Reaktionsmischung für 3,5 h unter Rückfluss erhitzt.
   Anschließend wurde die Reaktionsmischung 24 h bei 22 °C unter einer Stickstoffatmosphäre gerührt und anschließend auf 100 ml Diethylether gegossen. Der Niederschlag wurde abgetrennt und 24 h bei 80 °C in einem Vakuumtrockenschrank getrocknet.
   Man erhielt das kationische Benzoxazin(co)polymer alk-11. Durch NMR-spektroskopische Methoden wurde gezeigt, dass mindestens 5% aller Stickstoffatome, bezogen auf die Gesamtanzahl aller Stickstoffatome im o.g. kationischen Benzoxazin(co)polymer, in Form permanent quartärer Stickstoffatome vorliegen.

4. Wasserlöslichkeit der kationischen Benzoxazin(co)polymere
Mindestens 0,1 g eines im Vakuum getrockneten kationischen Benzoxazin(co)polymers alk-3, alk-8 oder alk-11 wurden zusammen mit höchstens 9,9 g Wasser (pH = 7) in einem 25 ml Schraubdeckelgläschen eingewogen. Die Gemische wurden anschließend bei 70 °C für mindestens 5 min gerührt (Magnetrührer) und anschließend bei 22 °C für 45 min nachgerührt. Die kationischen Benzoxazin(co)polymere der vorliegenden Erfindung lassen sich unter diesen Bedingungen in einer Menge von mindestens 10 g/ 1000 g Wasser ohne Trübung in Wasser aufnehmen. Darüber hinaus weisen die o.g. kationischen Benzoxazin(co)polymere gegenüber den korrespondierenden nicht-kationischen Benzoxazin(co)polymeren eine verbesserte Löslichkeit in Wasser (bei 22°C und pH =7) auf.
5. Kosmetische Formulierungen
Die folgenden Rezepturen wurden unter Anwendung bekannter Herstellungsverfahren bereitgestellt. Alle Mengenangaben sind, soweit nicht anders definiert, in Gewichtsprozent bezogen auf das Gewicht des jeweiligen Mittels. Für die verwendeten Rohstoffe zählen die technischen Daten des zur Zeit der Anmeldung aktuellen Rohstoffdatenblattes des jeweiligen Herstellers.
5.1 Oxidative Farbveränderungsmittel
   Zur Herstellung eines anwendungsbereiten Färbemittels wurden 50 g einer Färbecreme der unten aufgeführten Tabelle der Färbecremes unter Rühren mit 50 g eines Entwicklers gemäß Tabelle mit den Entwicklern gemischt. Aus jeder Färbecreme wurden drei verschiedene Anwendungsmischungen unter Zuhilfenahme von je einem der drei Entwickler gemäß Tabelle der Entwickler hergestellt. Es resultierten daraus je Färbecreme 3 verschiedene Anwendungsmischungen, die sich nur im Gehalt an Wasserstoffperoxid unterschieden. Bei Applikation auf Kopfhaar und einer Einwirkungszeit von 30 Minuten wurde nach dem Spülen und Trocknen mit jeder Anwendungsmischung ein hervorragendes Färbeergebnis bzw. für F6 Aufhellergebnis erzielt.

### Färbecremes

| | F1 | F2 | F3 | F4 | F5 | F6 |
|---|---|---|---|---|---|---|
| Hydrenol D | 5,50 | 8,50 | - | 8,10 | 7,15 | 7,15 |
| Lorol 16 | 2,00 | 2,00 | 8,00 | 2,70 | 2,60 | 2,60 |
| Isostearinsäure | - | - | - | 2,00 | - | - |
| Edenor C14 98/100 | - | - | - | 0,50 | - | - |
| Eumulgin B1 | 0,50 | 0,75 | - | 0,50 | 0,65 | 0,65 |
| Eumulgin B2 | 0,50 | - | - | 0,50 | 0,65 | 0,65 |
| Mergital CS 50 A | - | - | 5,00 | - | - | - |
| Dehydol LS 2 deo N | - | - | 4,90 | - | - | - |
| Edenor PK 1805 | - | - | 6,75 | - | - | - |
| Lamesoft PO 65 | 2,00 | - | - | - | - | - |
| Akypo Soft 45 NV | 10,00 | - | - | - | 10,00 | 10,00 |
| Protelan MST 35 | - | - | - | - | 6,00 | 6,00 |
| Texapon K 14 S 70% | 2,80 | - | - | - | - | - |
| Texapon NSO UP | - | 15,00 | 4,50 | 7,00 | - | - |
| Amphoterge K-2 | - | - | 1,00 | - | - | - |
| Dehyton K | - | 12,50 | - | 5,00 | - | - |
| kationisches Benzoxazin(co)polymer alk-3 | - | 0,40 | - | 0,30 | - | 0,50 |
| kationisches Benzoxazin(co)polymer alk-8 | 0,50 | - | - | 0,30 | - | - |
| kationisches Benzoxazin(co)polymer alk-11 | - | 0,10 | 0,60 | - | 0,50 | - |
| Ammoniak 25% | 6,50 | 1,50 | - | 7,30 | - | - |
| 2-Aminoethanol | - | - | 4,50 | - | 6,30 | 6,30 |
| Kaliumhydroxid | - | - | - | 1,20 | 1,00 | 1,00 |
| L-Arginin | - | 1,00 | 1,00 | - | - | - |
| Turpinal SL | 0,20 | 0,20 | 0,20 | 0,20 | 0,20 | 0,20 |
| 1,2-Propandiol | - | - | 6,75 | - | - | - |
| Isopropanol | - | - | 14,50 | - | - | - |
| 2-Phenoxyethanol | - | 0,60 | - | - | - | - |
| Methylparaben | - | 0,15 | - | - | - | - |
| Propylparaben | - | 0,15 | - | - | - | - |
| Natriumsilikat 40/42 | - | 0,50 | - | 0,50 | 0,50 | 0,50 |
| p-Toluylendiamisulfat | 1,40 | 0,50 | 0,30 | 1,00 | 1,10 | - |
| 4-Amino-3-methylphenol | - | 0,20 | - | - | - | - |
| Resorcin | 0,50 | - | 0,03 | 0,10 | - | - |
| 4-Chlorresorcin | - | 0,20 | 0,10 | - | - | - |
| 2-Methylresorcin | - | 0,60 | 0,15 | 0,50 | 0,10 | - |
| 2,7-Dihydroxynaphthalin | - | 0,40 | - | - | 0,30 | - |
| 2,4,5,6-Tetraaminopyrimidinsulfat | - | 1,40 | - | 1,00 | - | - |
| 2-Amino-4-(2-hydroxyethyl)amino-anisolsulfat | - | 0,01 | - | - | - | - |
| 3-Amino-2-methylamino-6-methoxy-pyridin | - | - | 0,05 | 0,10 | - | - |
| 2-Amino-3-hydroxypyridin | - | - | - | - | 0,07 | - |
| m-Aminophenol | 0,10 | - | - | 0,05 | - | - |
| 2-Amino-6-chlor-4-nitrophenol | - | 0,10 | - | - | - | - |
| Ascorbinsäure | 0,10 | 0,40 | 0,20 | 0,40 | 0,10 | 0,10 |
| Natriumsulfit 96% | 0,40 | 0,40 | 0,20 | 0,50 | 0,40 | 0,40 |
| Ammoniumsulfat | 0,16 | - | - | 0,30 | - | - |
| Ammoniumdihydrogenphosphat | - | 0,80 | - | - | - | - |
| Glycin | - | - | - | 1,20 | 1,00 | 1,00 |
| Quaternium-91 | 1,00 | 1,00 | 1,00 | 1,00 | 1,00 | 1,00 |
| Quaternium-27 | 1,00 | 1,00 | 1,00 | 1,00 | 1,00 | 1,00 |
| PPG-3 Benzyl Ether Myristate | 0,3 | 0,3 | 0,3 | 0,3 | 0,3 | 0,3 |
| Akypoquat 131 | 0,5 | 0,8 | 1,0 | 1,0 | 0,5 | 0,3 |
| Tegoamid S 18 | 0,5 | 1,0 | 1,5 | 0,8 | 1,0 | 1,0 |
| Dehyquart L 80 | 0,8 | 0,8 | 0,8 | 0,8 | 0,8 | 0,8 |
| Dow Corning 200, 60000 cSt | 0,3 | 0,2 | 0,1 | 0,25 | 0,2 | 0,1 |
| Dow Corning 200 Fluid, 0,65 cSt | 0,2 | 0,2 | 0,2 | 0,2 | 0,1 | 0,1 |
| Ectoin | 1,00 | 1,00 | 1,00 | 1,00 | 1,00 | 1,00 |
| Taurin | 1,00 | 1,25 | 1,50 | 2,00 | 1,50 | 1,50 |
| Extrapone White Tea GW | 0,1 | 0,1 | 0,1 | 0,1 | 0,1 | 0,1 |
| Wasser | <----- ad 100 -----> | | | | | |

### Entwickler

| | E1 | E2 | E3 |
|---|---|---|---|
| Dipicolinsäure | 0,10 | 0,10 | 0,10 |
| Dinatriumpyrophosphat | 0,03 | 0,03 | 0,03 |
| Turpinal SL | 1,50 | 1,50 | 1,50 |
| Texapon NSO UP | 2,00 | 2,00 | 2,00 |
| Dow Corning 200, 60000 cSt | 0,1 | 0,1 | - |
| Dow Corning 200 Fluid, 0,65 cSt | 0,1 | - | 0,1 |
| Aculyn 33A | 12,00 | 12,00 | 12,00 |
| Wasserstoffperoxid 50% | 12,00 | 20,00 | 24,00 |
| Wasser | <----- ad 100 -----> | | |

### 5.2 Shampoo

| | S-1 | S-2 | S-3 | S-4 |
|---|---|---|---|---|
| Texapon N70 | 15,0 | 15,0 | 15,0 | 15,00 |
| Incromine BB | 0,3 | 0,5 | 0,8 | 1,0 |
| Antil 141 L | - | - | 1,0 | 1,0 |
| Gluadin WQ | - | - | 0,3 | 0,3 |
| DC 193 Fluid | - | - | 0,5 | 0,5 |
| Quaternium-91 | 0,1 | 0,1 | 0,1 | 0,1 |
| PPG-3 Benzyl Ether Myristate | 0,1 | 0,1 | 0,1 | 0,1 |
| kationisches Benzoxazin(co)polymer alk-3 | 0,5 | - | - | 0,3 |
| kationisches Benzoxazin(co)polymer alk-8 | - | 0,5 | - | - |
| kationisches Benzoxazin(co)polymer alk-11 | - | - | 0,5 | 0,2 |
| Lexquat AMG-BEO | 0,05 | 0,05 | 0,2 | 0,2 |
| Quaternium-72 | 0,1 | 0,1 | 0,1 | 0,1 |
| Dehyquart L 80 | - | 1,0 | - | 1,0 |
| Rewoteric RTM 50 | 1,0 | - | 1,0 | |
| Abilquat 3272 | 0,8 | 1,5 | 0,5 | 1,0 |
| Lamesoft PO 65 | 0,3 | 0,3 | - | - |
| Dow Corning 200, 60000 cSt | - | 0,1 | 0,1 | - |
| Dow Corning 200 Fluid, 0,65 cSt | 0,1 | 0,1 | 0,1 | 0,1 |
| Natriumbenzoat | 0,5 | 0,5 | 0,5 | 0,5 |
| Dehyton PS | 6,0 | 6,0 | 6,0 | 6,0 |
| Salicylsäure | 0,2 | 0,2 | 0,2 | 0,2 |
| Euperlan PK 3000 AM | 2,0 | 2,0 | - | - |
| D-Panthenol | 0,1 | 0,1 | - | - |
| Nikotinsäureamid | 0,1 | 0,1 | - | - |
| Cetiol HE | 0,3 | 0,3 | 1,5 | 1,5 |
| Cremophor CO 40 | - | - | 2,0 | 2,0 |
| Polyquaternium 10 | 0,2 | 0,2 | 0,5 | 0,5 |
| Natriumchlorid | 1,5 | 1,5 | 0,3 | 0,3 |
| Litchiderm LS 9704 | 0,1 | 0,5 | 0,05 | 0,2 |
| Ectoin | 0,1 | 0,5 | 0,3 | 0,3 |
| Taurin | 0,5 | 1,0 | 0,25 | 0,75 |
| Extrapone White Tea GW | 0,1 | 0,5 | 0,05 | 0,2 |
| Wasser | Ad 100 | Ad 100 | Ad 100 | Ad 100 |

### 5.3 Glanztonic

| | T-1 | T-2 | T-3 | T-4 |
|---|---|---|---|---|
| Schercoquat BAS | 1,0 | 1,0 | 1,0 | 1,0 |
| Polyquart H 81 | 2,0 | 2,0 | - | - |
| Quaternium-91 | 0,5 | 0,5 | 1,0 | 1,0 |
| PPG-3 Benzyl Ether Myristate | 0,3 | 0,3 | 0,5 | 0,5 |
| Adogen S18 | 0,3 | - | 0,5 | - |
| Dow Corning 949 | 0,3 | - | 0,3 | - |
| Quaternium-83 | 0,5 | 0,5 | 0,8 | 0,8 |
| Armovare VGH 70 | - | 0,3 | - | 0,8 |
| Abilquat 3270 | 0,5 | 0,5 | 0,5 | 0,5 |
| Cremophor CO 40 | 2,0 | 2,0 | - | - |
| Phenoxyethanol | 0,4 | 0,4 | - | - |
| Zitronensäure | 0,5 | 0,5 | - | - |
| Isopropanol | - | - | 6,0 | 6,4 |
| Dow Corning 200, 60000 cSt | 0,5 | 1,0 | 1,0 | 2,0 |
| DC 200 Fluid | 1,0 | 1,0 | 2,0 | 2,0 |
| kationisches Benzoxazin(co)polymer alk-3 | - | 0,6 | - | - |
| kationisches Benzoxazin(co)polymer alk-8 | - | - | 0,3 | 0,5 |
| kationisches Benzoxazin(co)polymer alk-11 | 0,5 | - | 0,4 | - |
| Öl aus Cashew | 0,1 | 0,1 | 0,1 | 0,1 |
| Cetiol J 600 | 0,5 | 0,3 | - | 1,0 |
| n-Butan | - | - | 91,5 | 91,5 |
| Litchiderm LS 9704 | 0,1 | 0,5 | 0,5 | 0,1 |
| Ectoin | 0,1 | 0,5 | 0,5 | 0,1 |
| Taurin | 0,3 | 0,5 | 0,5 | 0,3 |
| Extrapone White Tea GW | 0,1 | 0,5 | 0,1 | 0,1 |
| Wasser | Ad 100 | Ad 100 | Ad 100 | Ad 100 |

### 5.4 Spülung

| | Sp-1 | Sp-2 | Sp-3 | Sp-4 |
|---|---|---|---|---|
| Cutina GMS-V | 0,3 | 0,3 | 0,2 | 0,2 |
| Dehyquart F 75 | 3,8 | 0,8 | 1,0 | 1,0 |
| Lanette O | 4,0 | 4,0 | 3,0 | 3,0 |
| Eumulgin B2 | 0,2 | 0,2 | 0,3 | 0,3 |
| Paraffinum Liquidum | 0,8 | 0,8 | | |
| Varisoft W 575 PG | | | 4,0 | 4,0 |
| Quaternium-91 | 3,5 | 4,0 | 2,5 | 3,0 |
| PPG-3 Benzyl Ether Myristate | 0,5 | 0,5 | 0,8 | 0,8 |
| Incroquat Behenyl HE | 2,0 | 2,0 | 2,0 | 2,0 |
| Dow Corning 200, 60000 cSt | 1,0 | 0,5 | 1,5 | 0,3 |
| Dow Corning 200 Fluid, 0,65 | 0,5 | 0,5 | 0,3 | 0,1 |
| Isopropylmyristat | | | 1,0 | 1,0 |
| Marulaöl | 0,1 | 0,1 | - | 0,1 |
| Pistazienöl | 0,1 | - | 0,1 | - |
| Öl aus "Rosa Pfeffer" | 0,1 | 0,1 | 0,1 | 0,1 |
| Öl aus Cashew | 0,1 | 0,1 | 0,1 | 0,1 |
| Tego Amid S 18 | 1,5 | 2,0 | 0,3 | 0,3 |
| Empigen CSC | 0,5 | 0,75 | 1,5 | 2,0 |
| Salcare SC 96 | 0,4 | 0,3 | 0,6 | 0,6 |
| Zitronensäure | | | 0,4 | 0,4 |
| D-Panthenol | | | 0,2 | 0,2 |
| Ajidew NL 50 | | | 1,0 | 1,0 |
| Dehyquart A-CA | 3,0 | 3,0 | | |
| Milchsäure | 0,5 | 0,5 | | |
| Phenoxyethanol | 0,4 | 0,4 | 0,3 | 0,3 |
| Wacker Belsil ADM 8020 VP | 0,9 | 0,9 | | |
| Litchiderm LS 9704 | 0,1 | 0,3 | 0,1 | 0,2 |
| Ectoin | 0,1 | 0,3 | 0,3 | 0,3 |
| Taurin | 0,1 | 0,3 | 0,5 | 0,3 |
| Extrapone White Tea GW | 0,1 | 0,3 | 0,1 | 0,2 |
| Wasser | Ad 100 | Ad 100 | Ad 100 | Ad 100 |

### 5.5 Haarkur

| | K-1 | K-2 | K-3 | K-4 |
|---|---|---|---|---|
| Synthalen K | 0,3 | 0,3 | 0,3 | 0,3 |
| Sepigel 305 | 3,0 | 3,0 | 3,0 | 3,0 |
| Dow Corning 1403 Fluid | 0,5 | 0,5 | 0,5 | 0,5 |
| Natronlauge 50% | 0,15 | 0,15 | 0,15 | 0,15 |
| Luviskosl K 30 (Pulver) | 0,15 | 0,15 | 0,15 | 0,15 |
| Polymer JR 400 | 0,4 | 0,4 | 0,4 | 0,4 |
| Gafquat 755 N | 0,5 | 0,5 | 0,5 | 0,5 |
| Dehyquart F 75 | 0,6 | 0,6 | 0,6 | 0,6 |
| Quaternium-27 | 0,5 | 0,75 | 1,0 | 2,0 |
| Quaternium-91 | 1,0 | 1,5 | 2,0 | 4,0 |
| PPG-3 Benzyl Ether Myristate | 0,3 | 0,3 | 0,5 | 1,0 |
| kationisches Benzoxazin(co)polymer alk-3 | 0,3 | 0,5 | - | - |
| kationisches Benzoxazin(co)polymer alk-8 | - | - | 0,4 | - |
| kationisches Benzoxazin(co)polymer alk-11 | 0,3 | - | - | 0,7 |
| Öl aus Cashew | 0,1 | 0,1 | 0,1 | 0,1 |
| Akypoquat 131 | 1,0 | 2,0 | 2,5 | 4,0 |
| Tegoamid S18 | 0,5 | 1,0 | 1,0 | 1,5 |
| Rewoquat RTM 50 | - | - | 1,0 | 0,5 |
| Quaternium-80 | 0,5 | - | 0,5 | 1,0 |
| Dow Corning 200, 60000 cSt | 1,0 | 0,5 | 1,5 | 0,3 |
| Dow Corning 200 Fluid, 0,65 cSt | 0,5 | 0,5 | 0,3 | 0,1 |
| Ethanol 96% | 17,0 | 17,0 | 17,0 | 17,0 |
| D-Panthenol 75%ig | 0,2 | 0,2 | 0,2 | 0,2 |
| Nikotinsäureamid | 0,1 | 0,1 | 0,1 | 0,1 |
| Ajidew NL 50 | 1,0 | 1,0 | 1,0 | 1,0 |
| Litchiderm LS 9704 | 0,1 | 0,2 | 0,3 | 0,5 |
| Ectoin | 0,1 | 0,2 | 0,3 | 0,5 |
| Taurin | 0,1 | 0,2 | 0,3 | 0,5 |
| Extrapone White Tea GW | 0,1 | 0,2 | 0,3 | 0,5 |
| Wasser | Ad 100 | Ad 100 | Ad 100 | Ad 100 |

### 5.6 Haargel

| | G-1 | G-2 | G-3 | G-4 |
|---|---|---|---|---|
| Synthalen K | 0,7 | - | 0,7 | 0,7 |
| Aculyn 28 | - | 0,6 | - | - |
| PVPNA Copolymer 60/40 | 10,0 | 5,5 | 10,0 | 10,0 |
| Amphomer | - | 2,0 | - | - |
| Dow Corning 193 Fluid | 0,5 | 0,5 | 0,5 | 0,5 |
| Akypoquat 131 | 0,4 | 0,4 | 0,8 | 2,0 |
| Quaternium-91 | 1,0 | 1,5 | 2,0 | 4,0 |
| PPG-3 Benzyl Ether Myristate | 1,0 | 1,0 | 1,0 | 1,5 |
| Dehyquart L 80 | 1,0 | 1,0 | 1,0 | 1,0 |
| Quaternium-72 | 0,5 | 0,5 | 0,5 | 1,0 |
| Quaternium-80 | 0,2 | 0,2 | 0,5 | 1,0 |
| Cetiol CC | 0,2 | 0,3 | 0,3 | 0,4 |
| Dow Corning 200, 60000 cSt | 1,0 | 0,5 | 1,5 | 0,3 |
| kationisches Benzoxazin(co)polymer alk-3 | 0,5 | - | - | - |
| kationisches Benzoxazin(co)polymer alk-8 | - | 0,4 | 0,3 | - |
| kationisches Benzoxazin(co)polymer alk-11 | - | - | 0,3 | 0,6 |
| Avocadoöl | 0,1 | 0,1 | 0,1 | 0,1 |
| Dow Corning 200 Fluid, 0,65 cSt | 0,5 | 0,5 | 0,3 | 0,1 |
| Ethanol 96% | 25,0 | 25,0 | 25,0 | 25,0 |
| PEG-40 hydrogenated Castor Oil | 0,6 | 0,6 | 0,6 | 0,6 |
| Litchiderm LS 9704 | 0,1 | 0,2 | 0,3 | 0,5 |
| Extrapone Brennessel | 0,1 | 0,2 | 0,3 | 0,5 |
| Wasser | Ad 100 | Ad 100 | Ad 100 | Ad 100 |

### 5.7 Haarspray

| | G-1 | G-2 | G-3 | G-4 |
|---|---|---|---|---|
| Ethanol 96% | 45,0 | 45,0 | 45,0 | 45,0 |
| AMP | 1,0 | 1,0 | 1,0 | 1,0 |
| Amphomer LV-71 | 3,0 | 3,0 | 3,0 | - |
| Hydagen HCMS | 0,3 | 0,5 | 0,8 | 0,3 |
| Polyquaternium-55 | - | - | - | 5,0 |
| Polyquaternium-11 | - | - | - | 3,2 |
| kationisches Benzoxazin(co)polymer alk-3 | 0,5 | 0,3 | - | - |
| kationisches Benzoxazin(co)polymer alk-8 | - | 0,4 | - | 0,5 |
| kationisches Benzoxazin(co)polymer alk-11 | - | - | 0,6 | - |
| Quaternium-72 | 0,4 | 0,4 | 0,8 | 2,0 |
| Quaternium-91 | 1,0 | 1,5 | 2,0 | 4,0 |
| PPG-3 Benzyl Ether Myristate | 0,5 | 1,0 | 1,0 | 1,0 |
| Incromine BB | 0,3 | 0,5 | 0,8 | 1,5 |
| Dow Corning 200, 60000 cSt | 1,0 | 0,5 | 1,5 | 0,3 |
| Cetiol CC | 0,1 | 0,1 | 0,2 | 0,2 |
| Avocadoöl | 0,1 | 0,1 | 0,1 | 0,1 |
| Dow Corning 200 Fluid, 0,65 cSt | 0,5 | 0,5 | 0,3 | 0,1 |
| Dimethylether | 40,0 | 40,0 | 40,0 | 40,0 |
| Litchiderm LS 9704 | 0,1 | 0,2 | 0,3 | 0,5 |
| Ectoin | 0,1 | 0,2 | 0,3 | 0,5 |
| Taurin | 0,1 | 0,2 | 0,3 | 0,5 |
| Extrapone White Tea GW | 0,1 | 0,2 | 0,3 | 0,5 |
| Wasser | Ad 100 | Ad 100 | Ad 100 | Ad 100 |

Die Mittel wurden zur Herstellung von Aerosolhaarschäumen jeweils in einen geeigneten druckfesten Behälter eingefüllt, der daraufhin mit einem Ventil verschlossen wurde. Die Mittel wurden anschließend jeweils mit dem Treibmittel Dimethylether versetzt.

### 5.8 Haarschäume

| Rohstoffe | E1 | E2 | E3 |
|---|---|---|---|
| Natriumbenzoat | 0,33 | 0,33 | 0,33 |
| Genamin CTAC¹ | 1,10 | 1,10 | 1,10 |
| PEG-40 Hydrogenated Castor Oil² | 0,88 | 0,88 | 0,88 |
| Parfüm | 0,11 | 0,11 | 0,11 |
| AMP-Ultra PC 1000³ | 0,51 | 0,39 | 0,26 |
| kationisches Benzoxazin(co)polymer alk-3 | 0,45 | - | - |
| kationisches Benzoxazin(co)polymer alk-8 | - | 0,65 | - |
| kationisches Benzoxazin(co)polymer alk-11 | - | - | 0,45 |
| Allianz LT-120⁴ | 7,10 | 5,30 | |
| Luviquat Supreme⁵ | 8,30 | 12,50 | 9,0 |
| Polyquaternium-4 | | | 1,0 |
| Natriumbenzoat | 0,3 | 0,3 | 0,3 |
| Benzophenone-4 | - | - | 0,1 |
| Panthenol | 0,1 | 0,2 | 0,15 |
| Wasser, entsalzt | ad 100 | ad 100 | ad 100 |

| | | | |
|---|---|---|---|
| ¹ Trimethylhexadecylammoniumchiorid (ca. 28-30% Aktivsubstanz in Wasser; INCI-Bezeichnung: Cetrimonium Chloride) (Clariant) ² hydriertes Rizinusöl mit ca. 40-45 EO-Einheiten (INCI-Bezeichnung: PEG-40 Hydrogenated Castor Oil) (BASF) ³ 2-Amino-2-methyl-propanol (INCI-Bezeichnung: Aminomethyl Propanol) (Dow Chemical) ⁴ Copolymer aus Bernsteinsäure-C₁-C₂-alkylestern, Hydroxyalkylacrylat und mindestens einem Monomer aus Acrylsäure, Methacrylsäure und deren einfache Ester (ca. 46-47,5% Festkörper in Wasser; INCI-Bezeichnung : Acrylates/C1-2 Succinates/Hydroxyacrylates Copolymer) (ISP) ⁵ Vinylpyrrolidon-Methacrylamid-Vinylimidazol-Vinylimidazoliummethosulfat-Copolymerisat (55:29:10:6) (19-21% Festkörper in Wasser; INCI-Bezeichnung: Polyquaternium-68) (BASF) | | | |

Die Mittel wurden zur Herstellung von Aerosolhaarschäumen jeweils in einen geeigneten druckfesten Behälter eingefüllt, der daraufhin mit einem Ventil verschlossen wurde. Die Mittel wurden anschließend jeweils mit einem Treibmittelgemisch aus Propan und n-Butan im Molverhältnis 1 : 1 versetzt. Das Gewichtsverhältnis von Mittel zu Treibmittelgemisch betrug jeweils 92 : 8.

### 5.9 Haarkur, Rinse-Off:

| | |
|---|---|
| C₁₆₋₁₈-Fettalkohol | 7,00 |
| Eumulgin^{®} B2¹ | 0,03 |
| Akypoquat 131 | 1,20 |
| Laureth-4 | 0,075 |
| Laureth-6 | 0,075 |
| C₁₂₋₁₄ Sec-Pareth-9 | 0,075 |
| PEG-8 | 0,075 |
| Quaternium-91 | 1,00 |
| PPG-3 Benzyl Ether Myristate | 0,5 |
| Quaternium-83 | 0,5 |
| Tegoamid S 18 | 1,00 |
| Dehyquart F 75² | 1,20 |
| Amodimethicone | 0,60 |
| Polyquaternium-37 | 0,5 |
| Dow Corning 200, 60000 cSt | 0,5 |
| Amaranthöl | 0,1 |
| Glycol | 0,15 |
| Cetiol CC | 0,3 |
| kationisches Benzoxazin(co)polymer alk-3 | 0,6 |
| Panthenol | 0,5 |
| Tocopherylacetat | 0,1 |
| Methylparaben | 0,20 |
| Parfüm | 0,30 |
| Phenoxyethanol | 0,40 |
| Wasser | ad 100 |

| | |
|---|---|
| ¹ Cetylstearylalkohol + 20 EO (INCI-Bezeichnung: Ceteareth-20) (COGNIS) ² Mischung aus Esterquat und Fettalkohol (INCI-Bezeichnung Distearoylethyl Hydroxyethylmonium Methosulfate (and) Cetearyl Alcohol) (COGNIS) | |

### 5.10 Haarspülung, Rinse-Off:

| | |
|---|---|
| C₁₆₋₁₈-Fettalkohol | 5,00 |
| Eumulgin^{®} B2¹ | 0,03 |
| Quaternium-27 | 1,20 |
| Trideceth-10 | 0,19 |
| Trideceth-5 | 0,11 |
| Dow Corning 200, 60000 cSt | 0,5 |
| Amaranthöl | 0,1 |
| Dehyquart F 75³ | 1,20 |
| Cetiol CC | 0,3 |
| kationisches Benzoxazin(co)polymer alk-8 | 0,9 |
| Amodimethicone | 0,48 |
| Glycerin | 0,135 |
| Dehyquart A | 2,0 |
| PPG-3 Benzyl Ether Myristate | 0,5 |
| Quaternium-91² | 6,00 |
| Polyquaternium-10 | 0,5 |
| Incromine BB | 2,5 |
| Akypoquat 131 | 2,0 |
| Pantholacton | 0,5 |
| Methylparaben | 0,20 |
| Parfüm | 0,30 |
| Phenoxyethanol | 0,40 |
| Wasser | ad 100 |

| | |
|---|---|
| ¹ Cetylstearylalkohol + 20 EO (INCI-Bezeichnung: Ceteareth-20) (COGNIS) ² Dimethyldistearylammoniumchlorid (INCI-Bezeichnung: Distearyldimonium Chloride) (CLARIANT) ³ Mischung aus Esterquat und Fettalkohol (INCI-Bezeichnung Distearoylethyl Hydroxyethylmonium Methosulfate (and) Cetearyl Alcohol) (COGNIS) | |

### 5.11 Shampoo:

| | |
|---|---|
| Citronensäure | 0,5 |
| Sodium Laureth Sul fate | 13,0 |
| Disodium Cocoamphodiacetate | 6,0 |
| Salicylsäure | 0,2 |
| D-Panthenol (75%) | 0,2 |
| Sodium Benzoate | 0,5 |
| Euperlan PK 3000 AM | 2,6 |
| Cetiol HE | 1,5 |
| Hydrogenated Castor Oil | 0,5 |
| Cetiol OE | 0,2 |
| kationisches Benzoxazin(co)polymer alk-3 | 0,4 |
| Arganöl | 0,8 |
| Sheabutter | 0,1 |
| Ceteareth-25 | 0,5 |
| Sodium Chloride | 0,5 |
| Wasser | Ad 100 |

### 5.12 Duschgel, stark rückfettend und pflegend:

| | |
|---|---|
| Komponente | Gew..% |
| Na-laurethsulfat (70%AS) | 12,5 |
| Cocamidopropylbetain (45 % AS) | 10,0 |
| kationisches Benzoxazin(co)polymer alk-11 | 0,7 |
| Polyquaternium-7 | 1,5 |
| Polyglyceryl-3-caprat | 1,0 |
| Champagnerextrakt | 1,0 |
| Cetiol ® HE | 0,5 |
| NaCl | 0,4 |
| Säuerungsmittel, UV-Filter, Konservierungsmittel, Wasser | ad 100 |

## Patentansprüche

1. Kationisches Benzoxazin(co)polymer, **dadurch gekennzeichnet, dass** mindestens 5% aller Stickstoffatome, bezogen auf die Gesamtanzahl aller Stickstoffatome im kationischen Benzoxazin(co)polymer, in Form permanent quartärer Stickstoffatome vorliegen, mit der Massgabe, dass diese permanent quartären Stickstoffatome eine vom pH-Wert unabhängige, nicht durch Protonierung des Stickstoffatoms gebildete, positive Formalladung aufweisen.

2. Kationisches Benzoxazin(co)polymer nach Anspruch 1, herstellbar durch ein Verfahren, umfassend die Schritte:
a) Bereitstellung mindestens einer polymerisierbaren Benzoxazin-Verbindung;
b) Herstellung eines nicht-kationischen Benzoxazin(co)polymers durch Polymerisation mindestens einer polymerisierbaren Benzoxazin-Verbindung unter geeigneten Polymerisationsbedingungen, wobei ein nicht-kationisches Benzoxazin(co)polymer in der Weise definiert ist, dass weniger als 1% seiner Stickstoffatome, bezogen auf die Gesamtanzahl aller Stickstoffatome im nicht-kationischen Benzoxazin(co)polymer, in Form permanent quartärer Stickstoffatome vorliegen, und
c) Umsetzung des in Schritt b) erhaltenen nicht-kationischen Benzoxazin(co)polymers mit mindestens einem Alkylierungsmittel, wobei die Menge des mindestens einen Alkylierungsmittels so gewählt wird, dass mindestens 5% aller Stickstoffatome, bezogen auf die Gesamtanzahl aller Stickstoffatome im nicht-kationischen Benzoxazin(co)polymer, in permanent quartäre Stickstoffatome überführt werden,
mit der Maßgabe, dass besagte permanent quartären Stickstoffatome eine vom pH-Wert unabhängige, nicht durch Protonierung des Stickstoffatoms gebildete, positive Formalladung aufweisen.

3. Kationisches Benzoxazin(co)polymer nach Anspruch 2, **dadurch gekennzeichnet, dass** die polymerisierbare Benzoxazin-Verbindung ausgewählt wird aus Verbindungen der allgemeinen Formel (I) und/oder aus Verbindungen der allgemeinen Formel (II), 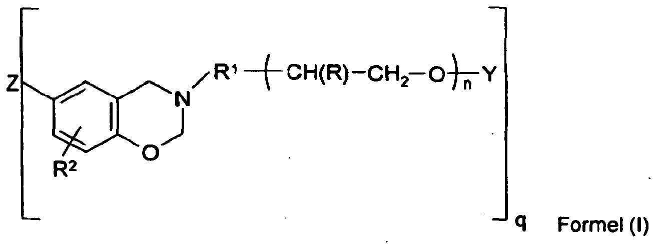 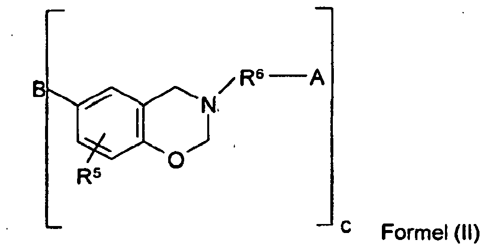 wobei q eine ganze Zahl von 1 bis 4 ist,
n eine Zahl von 2 bis 20000 ist,
R in jeder Wiederholungseinheit unabhängig voneinander ausgewählt wird aus Wasserstoff oder linearen oder verzweigten, gegebenenfalls substituierten Alkylgruppen, die 1 bis 8 Kohlenstoffatome umfassen,
Z ausgewählt wird aus Wasserstoff (für q = 1), Alkyl (für q = 1), Alkylen (für q = 2 bis 4), Carbonyl (für q = 2), Sauerstoff (für q = 2), Schwefel (für q = 2), Sulfoxid (für q = 2), Sulfon (für q = 2) und einer direkten, kovalenten Bindung (für q = 2),
R¹ für eine kovalente Bindung steht oder eine divalente Verbindungsgruppe ist, die 1 bis 100 Kohlenstoffatome umfasst,
R² ausgewählt wird aus Wasserstoff, Halogen, Alkyl und Alkenyl oder R² ein divalenter Rest ist, der aus der Benzoxazin-Struktur eine entsprechende Naphthoxazin-Struktur macht,
Y ausgewählt wird aus linearen oder verzweigten, gegebenenfalls substituierten Alkylgruppen, die 1 bis 15 Kohlenstoffatomen umfassen, cycloaliphatischen Resten, die gegebenenfalls ein oder mehrere Heteroatome enthalten, Arylresten, die gegebenenfalls ein oder mehrere Heteroatome enthalten und
*-(C=O)R³,
wobei R³ aus linearen oder verzweigten, gegebenenfalls substituierten Alkylgruppen mit 1 bis 15 Kohlenstoffatomen und X-R⁴ ausgewählt wird, wobei X aus S, O, und NH ausgewählt wird und R⁴ aus linearen oder verzweigten, gegebenenfalls substituierten Alkylgruppen mit 1 bis 15 Kohlenstoffatomen ausgewählt wird,
c eine ganze Zahl von 1 bis 4 ist,
B ausgewählt wird aus Wasserstoff (für c = 1), Alkyl (für c = 1), Alkylen (für c = 2 bis 4), Carbonyl (für c = 2), Sauerstoff (für c = 2), Schwefel (für c = 2), Sulfoxid (für c = 2), Sulfon (für c = 2) und einer direkten, kovalenten Bindung (für c = 2),
A eine Hydroxylgruppe oder ein stickstoffhaltiger Heterozyklus ist,
R⁵ ausgewählt wird aus Wasserstoff, Halogen, Alkyl und Alkenyl oder R⁵ ein divalenter Rest ist, der aus der Benzoxazin-Struktur eine entsprechende Naphthoxazin-Struktur macht und
R⁶ für eine kovalente Bindung steht oder eine divalente Verbindungsgruppe ist, die 1 bis 100 Kohlenstoffatome umfasst.

4. Kationisches Benzoxazin(co)polymer nach Anspruch 3, **dadurch gekennzeichnet, dass** die polymerisierbare Benzoxazin-Verbindung ausgewählt wird aus Verbindungen der allgemeinen Formel (III), 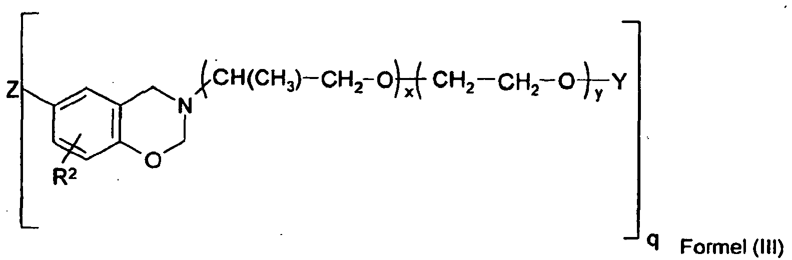 wobei x eine Zahl zwischen 0 und 1000 und y eine Zahl zwischen 0 und 1000 ist, mit der Maßgabe, dass x+y ≥ 2 ist und Z, R², Y und q jeweils wie in Anspruch 3 definiert sind.

5. Kationisches Benzoxazin(co)polymer nach einem oder beiden der Ansprüche 3 und 4, **dadurch gekennzeichnet, dass** das die polymerisierbare Benzoxazin-Verbindung ausgewählt wird aus Verbindungen der allgemeinen Formel (IV) und/oder aus Verbindungen der allgemeinen Formel (V). 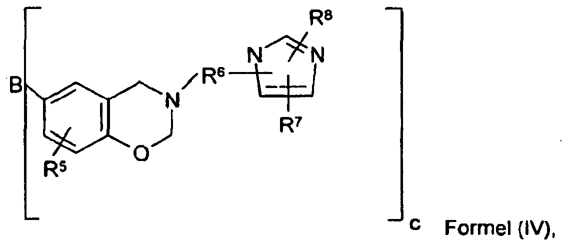 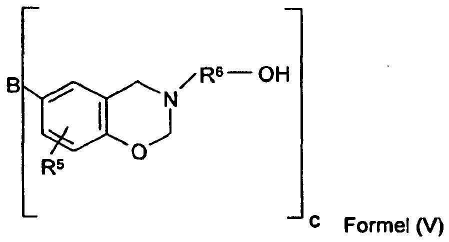 wobei R⁷ und R⁸ jeweils unabhängig voneinander ausgewählt werden aus Wasserstoff, Halogen, linearen oder verzweigten, gegebenenfalls substituierten Alkylgruppen, Alkenylgruppen und Arylgruppen und c, B, R⁵ und R⁶ jeweils wie in Anspruch 3 definiert sind.

6. Kationisches Benzoxazin(co)polymer nach mindestens einem der Ansprüche 2 bis 5, **dadurch gekennzeichnet, dass** das Alkylierungsmittel ausgewählt wird aus Alkylhalogeniden, Dialkylsulfaten, Dialkylcarbonaten und Alkylenoxiden.

7. Kationisches Benzoxazin(co)polymer nach mindestens einem der Ansprüche 1 bis 6, **dadurch gekennzeichnet, dass** das kationische Benzoxazin(co)polymer ein gewichtsmittleres Molekulargewicht von 500 bis 100000 g/mol aufweist.

8. Wasch- und Reinigungsmittel oder Textilbehandlungsmittel, umfassend mindestens ein kationisches Benzoxazin(co)polymer nach mindestens einem der Ansprüche 1 bis 7.

9. Kosmetisches Mittel, umfassend in einem kosmetischen Träger mindestens ein kationisches Benzoxazin(co)polymer nach mindestens einem der Ansprüche 1 bis 7.

10. Verfahren zur Behandlung mindestens einer Oberfläche, umfassend die Schritte:
a) Bereitstellung mindestens eines kationischen Benzoxazin(co)polymers nach mindestens einem der Ansprüche 1 bis 7 in einer applizierbaren Dareichungsform,
b) Behandlung mindestens einer Oberfläche mit dem in Schritt a) bereitgestellten kationischen Benzoxazin(co)polymer.

11. Verfahren nach Anspruch 10, **dadurch gekennzeichnet, dass** die Oberfläche ausgewählt wird aus Kohlefasern, harten Oberflächen, textilen Oberflächen und keratinischen Fasern.

12. Verfahren zur Herstellung eines kationischen Benzoxazin(co)polymers, indem mindestens 5% aller Stickstoffatome, bezogen auf die Gesamtanzahl aller Stickstoffatome im kationischen Benzoxazin(co)polymer, in Form permanent quartärer Stickstoffatome vorliegen, umfassend die Schritte:
a) Bereitstellung mindestens einer polymerisierbaren Benzoxazin-Verbindung;
b) Herstellung eines nicht-kationischen Benzoxazin(co)polymers durch Polymerisation mindestens einer polymerisierbaren Benzoxazin-Verbindung unter geeigneten Polymerisationsbedingungen, wobei ein nicht-kationisches Benzoxazin(co)polymer in der Weise definiert ist, dass weniger als 1% seiner Stickstoffatome, bezogen auf die Gesamtanzahl aller Stickstoffatome im nicht-kationischen Benzoxazin(co)polymer, in Form permanent quartärer Stickstoffatome vorliegen, und
c) Umsetzung des in Schritt b) erhaltenen nicht-kationischen Benzoxazin(co)polymers mit mindestens einem Alkylierungsmittel, wobei die Menge des mindestens einen Alkylierungsmittels so gewählt wird, dass mindestens 5% aller Stickstoffatome, bezogen auf die Gesamtanzahl aller Stickstoffatome im nicht-kationischen Benzoxazin(co)polymer, in permanent quartäre Stickstoffatome überführt werden,
mit der Maßgabe, dass besagte permanent quartären Stickstoffatome eine vom pH-Wert unabhängige, nicht durch Protonierung des Stickstoffatoms gebildete, positive Formalladung aufweisen.

13. Verwendung eines kationischen Benzoxazin(co)polymers nach mindestens einem der Ansprüche 1 bis 7 als Haftvermittler, als Schlichtemittel, zur Haarkonditionierung und/oder zur Haarumformung.

14. Verwendung eines kationischen Benzoxazin(co)polymers nach mindestens einem der Ansprüche 1 bis 7 zur Beschichtung von Oberflächen, insbesondere zur antibakteriellen Beschichtung von Oberflächen.

15. Verwendung eines kationischen Benzoxazin(co)polymers nach mindestens einem der Ansprüche 1 bis 7 zur Verbesserung der Schmutzablösung von und/oder Reduzierung der Wiederanschmutzbarkeit auf textilen oder harten Oberflächen.

## Claims

1. A cationic benzoxazine (co)polymer, **characterised in that** at least 5% of all the nitrogen atoms, relative to the total number of all the nitrogen atoms in the cationic benzoxazine (co)polymer, are present in the form of permanently quaternary nitrogen atoms, with the proviso that these permanently quaternary nitrogen atoms exhibit a pH-independent positive formal charge which is not formed by protonation of the nitrogen atom.

2. A cationic benzoxazine (co)polymer according to claim 1, producible by a method comprising the steps:
a) providing at least one polymerisable benzoxazine compound;
b) producing a non-cationic benzoxazine (co)polymer by polymerising at least one polymerisable benzoxazine compound under suitable polymerisation conditions, a non-cationic benzoxazine (co)polymer being defined such that less than 1% of its nitrogen atoms, relative to the total number of all the nitrogen atoms in the non-cationic benzoxazine (co)polymer, are present in the form of permanently quaternary nitrogen atoms, and
c) reacting the non-cationic benzoxazine (co)polymer obtained in step b) with at least one alkylating agent, the quantity of the at least one alkylating agent being selected such that at least 5% of all the nitrogen atoms, relative to the total number of all the nitrogen atoms in the non-cationic benzoxazine (co)polymer, are converted into permanently quaternary nitrogen atoms,
with the proviso that said permanently quaternary nitrogen atoms exhibit a pH-independent positive formal charge which is not formed by protonation of the nitrogen atom.

3. A cationic benzoxazine (co)polymer according to claim 2, **characterised in that** the polymerisable benzoxazine compound is selected from compounds of general formula (I) and/or from compounds of general formula (II), 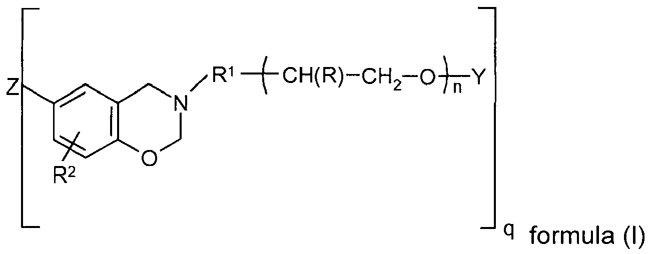 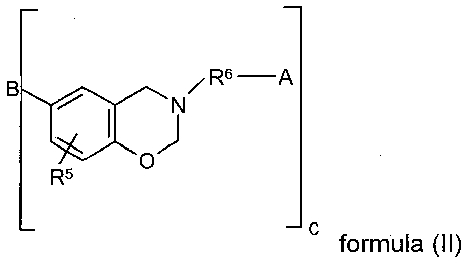 in which q is an integer from 1 to 4,
n is a number from 2 to 20000,
R in each repeat unit is mutually independently selected from hydrogen or linear or branched, optionally substituted alkyl groups which comprise 1 to 8 carbon atoms,
Z is selected from hydrogen (where q = 1), alkyl (where q = 1), alkylene (where q = 2 to 4), carbonyl (where q = 2), oxygen (where q = 2), sulfur (where q = 2), sulfoxide (where q = 2), sulfone (where q = 2) and a direct, covalent bond (where q = 2),
R¹ denotes a covalent bond or is a divalent linking group which comprises 1 to 100 carbon atoms,
R² is selected from hydrogen, halogen, alkyl and alkenyl or R² is a divalent residue which makes a corresponding naphthoxazine structure from the benzoxazine structure,
Y is selected from linear or branched, optionally substituted alkyl groups which comprise 1 to 15 carbon atoms, cycloaliphatic residues which optionally contain one or more heteroatoms, aryl residues which optionally contain one or more heteroatoms and
*-(C=O)R³,
in which R³ is selected from linear or branched, optionally substituted alkyl groups with 1 to 15 carbon atoms and X-R⁴, in which X is selected from S, O, and NH and R⁴ is selected from linear or branched, optionally substituted alkyl groups with 1 to 15 carbon atoms,
c is an integer from 1 to 4,
B is selected from hydrogen (where c = 1), alkyl (where c = 1), alkylene (where c = 2 to 4), carbonyl (where c = 2), oxygen (where c = 2), sulfur (where c = 2), sulfoxide (where c = 2), sulfone (where c = 2) and a direct, covalent bond (where c = 2),
A is a hydroxyl group or a nitrogenous heterocycle,
R⁵ is selected from hydrogen, halogen, alkyl and alkenyl or R⁵ is a divalent residue which makes a corresponding naphthoxazine structure from the benzoxazine structure and
R⁶ denotes a covalent bond or is a divalent linking group which comprises 1 to 100 carbon atoms.

4. A cationic benzoxazine (co)polymer according to claim 3, **characterised in that** the polymerisable benzoxazine compound is selected from compounds of general formula (III), 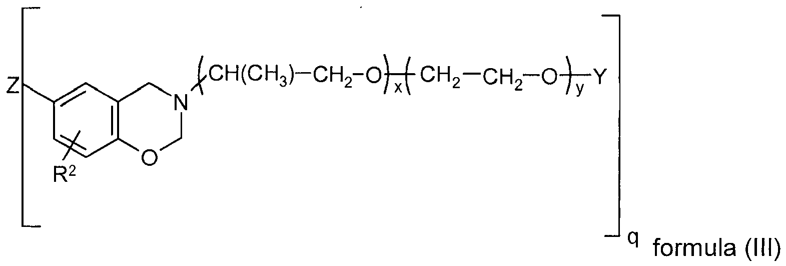 in which x is a number between 0 and 1000 and y a number between 0 and 1000, with the proviso that x+y ≥ 2, and Z, R², Y and q are in each case defined as in claim 3.

5. A cationic benzoxazine (co)polymer according to one or both of claims 3 and 4, **characterised in that** the polymerisable benzoxazine compound is selected from compounds of general formula (IV) and/or from compounds of general formula (V), 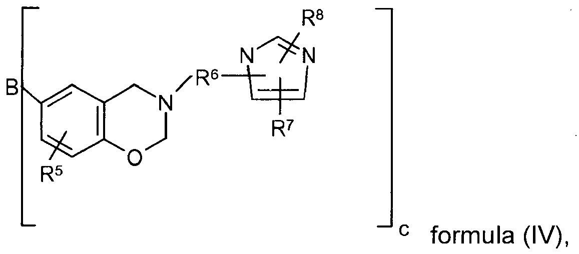 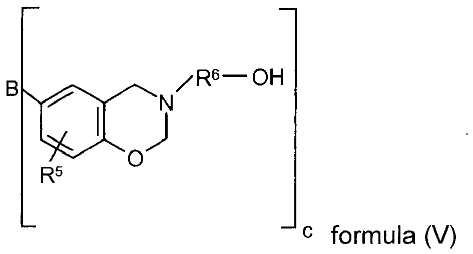 in which R⁷ and R⁸ are in each case mutually independently selected from hydrogen, halogen, linear or branched, optionally substituted alkyl groups, alkenyl groups and aryl groups and c, B, R⁵ and R⁶ are in each case defined as in claim 3.

6. A cationic benzoxazine (co)polymer according to at least one of claims 2 to 5, **characterised in that** the alkylating agent is selected from alkyl halides, dialkyl sulfates, dialkyl carbonates and alkylene oxides.

7. A cationic benzoxazine (co)polymer according to at least one of claims 1 to 6, **characterised in that** the cationic benzoxazine (co)polymer has a weight-average molecular weight of 500 to 100000 g/mol.

8. A washing and cleaning agent or textile treatment agent comprising at least one cationic benzoxazine (co)polymer according to at least one of claims 1 to 7.

9. A cosmetic agent comprising in a cosmetic carrier at least one cationic benzoxazine (co)polymer according to at least one of claims 1 to 7.

10. A method for treating at least one surface comprising the steps:
a) providing at least one cationic benzoxazine (co)polymer according to at least one of claims 1 to 7 in an applicable presentation,
b) treating at least one surface with the cationic benzoxazine (co)polymer provided in step a).

11. A method according to claim 10, **characterised in that** the surface is selected from carbon fibres, hard surfaces, textile surfaces and keratinic fibres.

12. A method for producing a cationic benzoxazine (co)polymer, in which at least 5% of all the nitrogen atoms, relative to the total number of all the nitrogen atoms in the cationic benzoxazine (co)polymer, are present in the form of permanently quaternary nitrogen atoms, comprising the steps:
a) providing at least one polymerisable benzoxazine compound;
b) producing a non-cationic benzoxazine (co)polymer by polymerising at least one polymerisable benzoxazine compound under suitable polymerisation conditions, a non-cationic benzoxazine (co)polymer being defined such that less than 1% of its nitrogen atoms, relative to the total number of all the nitrogen atoms in the non-cationic benzoxazine (co)polymer, are present in the form of permanently quaternary nitrogen atoms, and
c) reacting the non-cationic benzoxazine (co)polymer obtained in step b) with at least one alkylating agent, the quantity of the at least one alkylating agent being selected such that at least 5% of all the nitrogen atoms, relative to the total number of all the nitrogen atoms in the non-cationic benzoxazine (co)polymer, are converted into permanently quaternary nitrogen atoms,
with the proviso that said permanently quaternary nitrogen atoms exhibit a pH-independent positive formal charge which is not formed by protonation of the nitrogen atom.

13. Use of a cationic benzoxazine (co)polymer according to at least one of claims 1 to 7 as a coupling agent, as a sizing agent, for hair conditioning and/or for hair shaping.

14. Use of a cationic benzoxazine (co)polymer according to at least one of claims 1 to 7 for coating surfaces, in particular for the antibacterial coating of surfaces.

15. Use of a cationic benzoxazine (co)polymer according to at least one of claims 1 to 7 for improving soil detachment from and/or reducing susceptibility to soil redeposition onto textiles or hard surfaces.

## Revendications

1. (Co)polymère cationique de benzoxazine, **caractérisé en ce qu'**au moins 5 % de tous les atomes d'azote, rapportés au nombre total de tous les atomes d'azote dans le (co)polymère cationique de benzoxazine, sont présents sous la forme d'atomes d'azote quaternaires permanents, avec cette mesure que ces atomes d'azote quaternaires permanents présentent une charge formelle positive indépendante de la valeur du pH, qui n'est pas le résultat d'une protonation de l'atome d'azote.

2. (Co)polymère cationique de benzoxazine selon la revendication 1, que l'on peut préparer via un procédé comprenant les étapes dans lesquelles :
a) on procure au moins un composé de benzoxazine polymérisable ;
b) on prépare un (co)polymère de benzoxazine non cationique par polymérisation d'au moins un composé de benzoxazine polymérisable dans des conditions de polymérisation appropriées, un (co)polymère de benzoxazine non cationique étant défini par le fait que moins de 1 % de ses atomes d'azote, rapporté au nombre total de tous les atomes d'azote dans le (co)polymère de benzoxazine non cationique, sont présents sous la forme d'atomes d'azote quaternaires permanents ; et
c) on fait réagir le (co)polymère de benzoxazine non cationique que l'on obtient à l'étape b) avec au moins un agent d'alkylation, la quantité dudit au moins un agent d'alkylation étant sélectionnée de telle sorte qu'au moins 5 % de tous les atomes d'azote, rapportés au nombre total de tous les atomes d'azote dans le (co)polymère non cationique de benzoxazine, sont transformés en atomes d'azote quaternaires permanents ; avec cette mesure que lesdits atomes d'azote quaternaires permanents présentent une charge formelle positive indépendante de la valeur du pH, qui n'est pas le résultat d'une protonation de l'atome d'azote.

3. (Co)polymère cationique de benzoxazine selon la revendication 2, **caractérisé en ce que** le composé de benzoxazine polymérisable est choisi parmi des composés répondant à la formule générale (I) et/ou parmi des composés répondant à la formule générale (II), 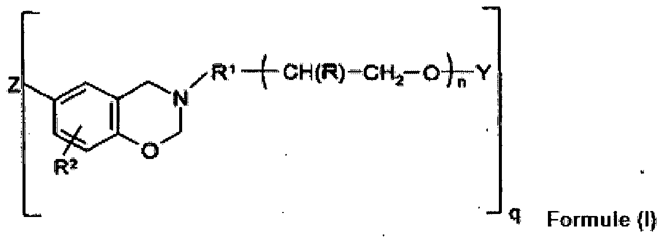 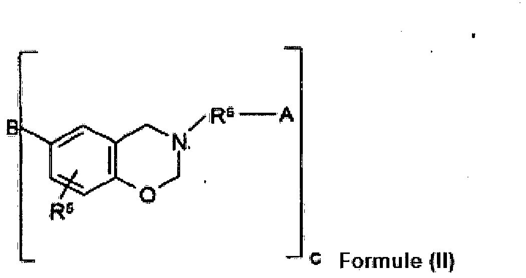 dans lesquelles
q représente un nombre entier de 1 à 4 ;
n représente un nombre de 2 à 20.000 ;
R, dans chaque unité récurrente, est choisi, de manière réciproquement indépendante, parmi un atome d'hydrogène ou des groupes alkyle linéaires ou ramifiés, substitués de manière facultative, qui comprennent de 1 à 8 atomes de carbone ;
Z est choisi parmi un atome d'hydrogène (pour q = 1), un groupe alkyle (pour q = 1), un groupe alkylène (pour q = 2 à 4), un groupe carbonyle (pour q = 2), un atome d'oxygène (pour q = 2), un atome de soufre (pour q = 2), un groupe sulfoxyde (pour q = 2), un groupe sulfone (pour q = 2) et une liaison covalente directe (pour q = 2) ;
R¹ représente une liaison covalente ou un groupe de liaison divalent qui comprend de 1 à 100 atomes de carbone ;
R² est choisi parmi un atome d'hydrogène, un atome d'halogène, un groupe alkyle et un groupe alcényle, ou bien R² représente un résidu divalent qui forme, à partir de la structure de benzoxazine, une structure de naphtoxazine correspondante ;
Y est choisi parmi des groupes alkyle linéaires ou ramifiés, substitués de manière facultative, qui comprennent de 1 à 15 atomes de carbone, des résidus cycloaliphatiques qui contiennent de manière facultative un ou plusieurs hétéroatomes, des résidus aryle qui contiennent de manière facultative un ou plusieurs hétéroatomes et un groupe *-(C=O)R³ ;
dans lequel R³ est choisi parmi des groupes alkyle linéaires ou ramifiés, substitués de manière facultative, qui comprennent de 1 à 15 atomes de carbone et un groupe X-R⁴, dans lequel X est choisi parmi un atome de soufre, un atome d'oxygène et un groupe NH, et R⁴ est choisi parmi des groupes alkyle linéaires ou ramifiés, substitués de manière facultative, qui comprennent de 1 à 15 atomes de carbone ;
c représente un nombre entier de 1 à 4 ;
B est choisi parmi un atome d'hydrogène (pour c = 1), un groupe alkyle (pour c = 1), un groupe alkylène (pour c = 2 à 4), un groupe carbonyle (pour c = 2), un atome d'oxygène (pour c = 2), un atome de soufre (pour c = 2), un groupe sulfoxyde (pour c = 2), un groupe sulfone (pour c = 2) et une liaison covalente directe (pour c = 2) ;
A représente un groupe hydroxyle ou un hétérocyclyle azoté ;
R⁵ est choisi parmi un atome d'hydrogène, un atome d'halogène, un groupe alkyle et un groupe alcényle, ou bien R⁵ représente un résidu divalent qui forme, à partir de la structure de benzoxazine, une structure de naphtoxazine correspondante ; et
R⁶ représente une liaison covalente ou un groupe de liaison divalent qui comprend de 1 à 100 atomes de carbone.

4. (Co)polymère cationique de benzoxazine selon la revendication 3, **caractérisé en ce que** le composé de benzoxazine polymérisable est choisi parmi des composés répondant à la formule générale (III), 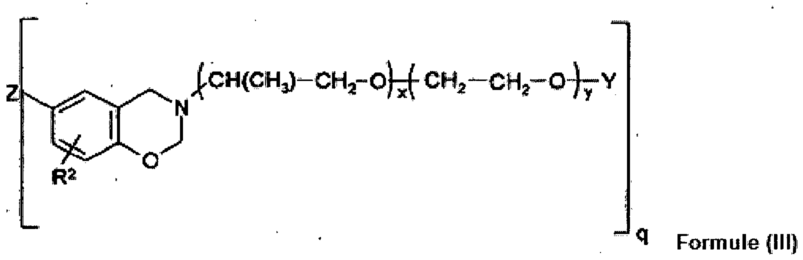 dans laquelle x représente un nombre entre 0 et 1.000 et y représente un nombre entre 0 et 1.000, avec cette mesure que x+y ≥ 2 et Z, R², Y et q sont respectivement tels que définis à la revendication 3.

5. (Co)polymère cationique de benzoxazine selon l'une quelconque des revendications 3 et 4 ou les deux, **caractérisé en ce que** le composé de benzoxazine polymérisable est choisi parmi des composés répondant à la formule générale (IV) et/ou parmi des composés répondant à la formule générale (V), 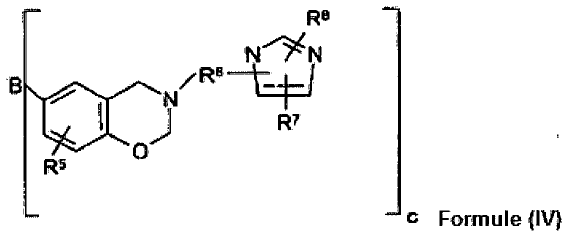 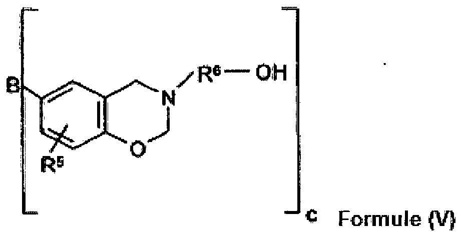 dans lesquelles
R⁷ et R⁸ sont choisis, chaque fois indépendamment l'un de l'autre, parmi un atome d'hydrogène, un atome d'halogène, des groupes alkyle, des groupes alcényle et des groupes aryle, linéaires ou ramifiés, substitués de manière facultative, et c, B, R⁵ et R⁶ sont respectivement tels que définis à la revendication 3.

6. (Co)polymère cationique de benzoxazine selon au moins une des revendications 2 à 5, **caractérisé en ce que** l'agent d'alkylation est choisi parmi des halogénures d'alkyle, des sulfates de dialkyle, des carbonates de dialkyle et des oxydes d'alkylènes.

7. (Co)polymère cationique de benzoxazine selon au moins une des revendications 1 à 6, **caractérisé en ce que** le (co)polymère cationique de benzoxazine présente un poids moléculaire moyen en poids de 500 à 100.000 g/mol.

8. Agent de lavage et de nettoyage ou agent de traitement des textiles, comprenant au moins un (co)polymère cationique de benzoxazine selon au moins une des revendications 1 à 7.

9. Agent cosmétique, comprenant, dans un support cosmétique, au moins un (co)polymère cationique de benzoxazine selon au moins une des revendications 1 à 7.

10. Procédé pour le traitement d'au moins une surface, comprenant les étapes dans lesquelles :
a) on procure au moins un (co)polymère cationique de benzoxazine selon au moins une des revendications 1 à 7 dans une forme de présentation applicable ;
b) on traite au moins une surface avec le (co)polymère cationique de benzoxazine tel que procuré à l'étape a).

11. Procédé selon la revendication 10, **caractérisé en ce que** la surface est choisie parmi des fibres de carbone, des surfaces dures, des surfaces textiles et des fibres kératiniques.

12. Procédé pour la préparation d'un (co)polymère cationique de benzoxazine, dans lequel au moins 5 % de tous les atomes d'azote, rapportés au nombre total de tous les atomes d'azote dans le (co)polymère cationique de benzoxazine, sont présents sous la forme d'atomes d'azote quaternaires permanents, comprenant les étapes dans lesquelles :
a) on procure au moins un composé de benzoxazine polymérisable ;
b) on prépare un (co)polymère de benzoxazine non cationique par polymérisation d'au moins un composé de benzoxazine polymérisable dans des conditions de polymérisation appropriées, un (co)polymère de benzoxazine non cationique étant défini par le fait que moins de 1 % de ses atomes d'azote, rapporté au nombre total de tous les atomes d'azote dans le (co)polymère de benzoxazine non cationique, sont présents sous la forme d'atomes d'azote quaternaires permanents ; et
c) on fait réagir le (co)polymère de benzoxazine non cationique que l'on obtient à l'étape b) avec au moins un agent d'alkylation, la quantité dudit au moins un agent d'alkylation étant sélectionnée de telle sorte qu'au moins 5 % de tous les atomes d'azote, rapportés au nombre total de tous les atomes d'azote dans le (co)polymère non cationique de benzoxazine, sont transformés en atomes d'azote quaternaires permanents ;
avec cette mesure que lesdits atomes d'azote quaternaires permanents présentent une charge formelle positive indépendante de la valeur du pH, qui n'est pas le résultat d'une protonation de l'atome d'azote.

13. Utilisation d'un (co)polymère de benzoxazine cationique selon au moins une des revendications 1 à 7, à titre d'agent améliorant l'adhérence, à titre d'agent d'encollage, pour la revitalisation capillaire et/ou pour le permanentage.

14. Utilisation d'un (co)polymère de benzoxazine cationique selon au moins une des revendications 1 à 7, pour l'enduction de surfaces, en particulier pour l'enduction antibactérienne de surfaces.

15. Utilisation d'un (co)polymère de benzoxazine cationique selon au moins une des revendications 1 à 7, pour l'amélioration de l'élimination des salissures et/ou la réduction d'une réapparition de la propension aux salissures sur des surfaces textiles ou dures.
